(19) Europäisches Patentamt
European Patent Office
Office européen des brevets

(11) **EP 4 188 014 A1**

(12) **EUROPEAN PATENT APPLICATION**
published in accordance with Art. 153(4) EPC

(43) Date of publication:
**31.05.2023 Bulletin 2023/22**

(21) Application number: **21853857.7**

(22) Date of filing: **26.07.2021**

(51) International Patent Classification (IPC):
**H04W 72/04** $^{(2023.01)}$   **H04W 4/40** $^{(2018.01)}$

(52) Cooperative Patent Classification (CPC):
**H04L 1/16; H04L 1/18; H04L 5/00; H04W 4/40; H04W 72/04**

(86) International application number:
**PCT/CN2021/108482**

(87) International publication number:
**WO 2022/028268 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.08.2020 CN 202010791671**

(71) Applicant: **Huawei Technologies Co., Ltd.**
**Shenzhen, Guangdong 518129 (CN)**

(72) Inventors:
• **HUANG, Haining**
  **Shenzhen, Guangdong 518129 (CN)**
• **LI, Chao**
  **Shenzhen, Guangdong 518129 (CN)**
• **YANG, Fan**
  **Shenzhen, Guangdong 518129 (CN)**
• **GUO, Wenting**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57)   This application provides a communication method and apparatus. After a first device sends first information to a second device, the second device sends second information to the first device to indicate whether the second device provides resource assistance information for the first device, so that the first device can determine, based on the indication of the second information fed back by the second device, whether the second device can provide the resource assistance information. Therefore, according to the communication method and apparatus provided in the embodiments, the first device can determine, based on the second information, whether the second device provides the resource assistance information, to reduce a delay caused when the first device keeps waiting for the second device to provide the resource assistance information, thereby ensuring a delay requirement in data transmission, and improving communication efficiency and transmission reliability of the first device during sidelink communication.

| First device | | Second device |
|---|---|---|
| | S101: First information, used to request resource assistance information → | |
| | S102: Second information, where the second information is used to indicate whether the second device provides the resource assistance information for the first device ← | |

FIG. 6

**Description**

This application claims priority to Chinese Patent Application No. 202010791671.X, filed with the China National Intellectual Property Administration on August 7, 2020 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

Sidelink (sidelink, SL) communication is a communication manner in which objects are directly connected to each other. Different from a conventional communication manner in which communication data between devices needs to pass through a network device, in sidelink communication, devices are allowed to directly transmit communication data to each other. A device sending communication data sends communication data to a receiving device, and a device receiving communication data receives the communication data from the sending device.

In some scenarios in the conventional technology, a device may perform sidelink communication without direct participation of a network device, and therefore the device may determine a communication resource used to perform sidelink communication. For example, before a device sending data (denoted as TX UE) in sidelink communication sends sidelink communication data to a device receiving data (denoted as RX UE), the TX UE may send request information to another device, and determine, based on communication resource information fed back by the another device based on the request information, a communication resource that can be used when the TX UE sends the sidelink communication data to the RX UE.

However, in the conventional technology, after the TX UE sends the request information, if the another device does not receive the request information or cannot feed back a communication resource for the TX UE, the TX UE needs to wait for a relatively long time or repeatedly send the request information a plurality of times before continuing to determine the communication resource in another manner, which increases a delay generated when a device determines a communication resource used during sidelink communication, and reduces communication efficiency of the device during sidelink communication.

**SUMMARY**

This application provides a communication method and apparatus, to resolve a technical problem in the conventional technology that a delay generated when a device determines a communication resource used during sidelink communication is relatively large, thereby improving communication efficiency of the device during sidelink communication.

A first aspect of this application provides a communication method. For a first device and a third device in sidelink communication, before sending sidelink communication data to the third device, the first device receives second information sent by a second device, where the second information indicates that the second device can provide resource assistance information for the first device. Therefore, before performing sidelink communication, the first device determines that the second device can provide the resource assistance information for the first device, so that the first device can use the resource assistance information sent by the second device as a reference to finally determine a communication resource used when the first device performs sidelink communication with the third device, thereby improving communication efficiency of the first device during sidelink communication. The communication resource includes a time resource, a frequency resource, a time-frequency resource, and/or the like. In a specific implementation of this embodiment, the second device capable of providing the resource assistance information can actively send the second information to the first device to indicate, to the first device through the second information, that the second device can provide the resource assistance information, thereby reducing information exchange between the first device and the second device, and further improving communication efficiency of the first device.

In an embodiment of the first aspect of this application, before receiving the second information sent by the second device, and before sending the sidelink communication data to the third device, the first device may further actively send first information to the second device to request to obtain the resource assistance information from the second device. Subsequently, after receiving the first information, the second device may send the second information to the first device, so that if the first device receives the second information after sending the first information, the first device can at least determine, based on the second information, that the second device receives the first information, thereby ensuring reliability of the second information sent by the first device. In addition, the first device can determine, based on the second information, whether the second device provides the resource assistance information, so that the first device can follow up the second information in time to determine whether to continue to wait for the resource assistance information sent by the second device, or give up, as soon as possible, waiting for the second device to send the resource assistance information, so as to reduce a delay caused when the terminal device keeps waiting for the second device to provide the resource assistance information, thereby ensuring a delay requirement in data transmission, improving communication efficiency and transmission reliability of the first device during sidelink communication, and further improving spectrum utilization.

In an embodiment of the first aspect of this application, the second information may be used to indicate whether the second device provides the resource assistance information for the first device. When the second device determines that the second device can provide the resource assistance information for the first device, the second information sent by the second device indicates that the second device provides the resource assistance information for the first device. When the second device determines that the second device cannot provide the resource assistance information for the first device, the second information sent by the second device indicates that the second device does not provide the resource assistance information for the first device. After receiving the second information, the first device may determine, based on the second information, whether the second device can provide the resource assistance information for the first device.

Alternatively, the second information is only used to indicate that the second device provides the resource assistance information for the first device. If the first device does not receive the second information, it indicates that the second device does not provide the resource assistance information for the second device. When the second device determines that the second device can provide the resource assistance information for the first device, the second information sent by the second device indicates that the second device provides the resource assistance information for the first device. When the second device determines that the second device cannot provide the resource assistance information for the first device, the second device may not send the second information to the first device. When the first device does not receive the second information in a period of time, the first device may determine at least the following: the second device does not receive the first information, or the second device does not provide the resource assistance information for the first device. In this case, the first device may send the first information to the second device again, or send the first information to another device, or determine, in another manner, a resource used when the first device performs sidelink communication.

In an embodiment of the first aspect of this application, the second information sent by the second device to the first device is carried by a first channel, and the first channel may be a PSFCH. In this case, the PSFCH carries the second information, so that this embodiment is easy to implement and is universal. Alternatively, the first channel may be a newly defined channel, and the newly defined channel may be, for example, a PSRCH. In this case, the second information is carried by the new channel, so that expression of another existing channel is not affected when the newly added second information in this embodiment is exchanged.

In an embodiment of the first aspect of this application, when the second information is carried by the first channel and the second information can be used to indicate whether the second device provides the resource assistance information for the first device, the second information may correspond to different sequence cyclic shift values of the first channel to indicate "yes" or "no". For example, when the second information indicates that the second device provides the resource assistance information for the first device, the second information may correspond to a first sequence cyclic shift value of the first channel; or when the second information indicates that the second device does not provide the resource assistance information for the first device, the second information corresponds to a second sequence cyclic shift value of the first channel.

Alternatively, when the second device is carried by the first channel and the second information is used to indicate that the second device provides the resource assistance information for the first device, the second information may correspond to a sequence cyclic shift value of the first channel to perform indication. For example, when the second information indicates that the second device provides the resource assistance information for the first device, the second information may correspond to a third sequence cyclic shift value of the first channel.

In an embodiment of the first aspect of this application, when the first channel carrying the second information is the PSFCH, the second information is specifically carried in a first resource set. A resource set used for transmitting a PSFCH resource that carries the second information is denoted as the first resource set, and a resource set used for transmitting a PSFCH resource that carries an HARQ-ACK is denoted as a second resource set. Therefore, the first resource set and the second resource are complementary sets of each other in terms of PSFCH resource. The first resource set may be specifically indicated in a form of a bitmap. In this embodiment, a complementary set of resources of the resource set used for transmitting the PSFCH resource that carries the HARQ-ACK is properly used to improve spectrum utilization efficiency. In addition, the complementary set of resources can be used to transmit the second information, thereby providing transmission reliability of the first device.

In an embodiment of the first aspect of this application, it is denoted that the first device sends the first information to the second device in a first slot and the second device sends the second information to the first device in a second slot (which may be understood as that the first device receives the second information from the second device in the second slot). In this case, a relative relationship between the first slot and the second slot may meet at least the following condition: the second slot is the $1^{st}$ slot that includes the PSFCH and that is after a slot in which the last symbol of the first information is located, or the second slot may be the $1^{st}$ slot that includes the PSFCH and that is at an interval of N time units from the first slot, or a time interval between the first slot and the second slot is N time units.

In an embodiment of the first aspect of this application, the second information sent by the second device to the first device may be carried in a resource set used for transmitting the first channel. The resource set used for transmitting the first channel and a resource set used for transmitting the PSFCH are configured independently, and optionally, may be configured through frequency division multiplexing.

In an embodiment of the first aspect of this application, the second information may correspond to one or more bits of the first channel, where the one or more bits may be used to simultaneously indicate whether the second device provides the resource assistance information for the first device or indicate that the second device provides the resource assistance information for the first device, and indicate whether the second device successfully receives data sent by the first device. Therefore, the second device may not need to use different resources to distinguish between HARQ information and the second information that are sent by the second device, but carries the HRAR information and the second information by jointly using one or more bits. In addition, the second information provided in this embodiment may be carried in a resource set used for transmitting a PSFCH resource.

In an embodiment of the first aspect of this application, it is denoted that the first device sends the first information to the second device in a first slot and the second device sends the second information to the first device in a second slot (the first device receives the second information from the second device in the second slot). A relative relationship between the first slot and the second slot may meet at least the following condition: the second slot is the $1^{st}$ slot that includes the PSFCH and that is after a time interval of the first slot plus M time units, or a time interval between the first slot and the second slot is M time units. The time interval is configured in a resource pool, and the slot may be a logical slot in the resource pool, or may be a physical slot in the resource pool and outside the resource pool.

In an embodiment of the first aspect of this application, after the first device receives the second information sent by the second device (which may be understood as that the first device receives the second information from the second device), where the second information indicates that the second device provides the resource assistance information for the first device, the second device may no longer send the second information to the first device in a subsequent second time period, but the first device can receive the resource assistance information periodically sent by the second device. In other words, if the first device receives the second information from the second device, and the second information indicates that the second device provides the resource assistance information for the first device, the first device receives the periodical resource assistance information from the second device. This embodiment may be applied to a scenario in which the first device may frequently request to obtain the resource assistance information from a same second device in a short time, to reduce communication overheads and signaling overheads caused by frequent signaling interaction between the first device and the second device.

In an embodiment of the first aspect of this application, after the first device sends the first information to the second device, if the first device receives the second information sent by the second device and the second information indicates that the second device does not provide the resource assistance information for the first device, the first device may determine the resource assistance information in another manner or determine a communication resource without using the resource assistance information.

Alternatively, after the first device sends the first information to the second device, if the first device does not receive, in a first time period, the second information sent by the second device, the first device may determine the resource assistance information in another manner or determine a communication resource without using the resource assistance information.

The another manner includes: the first device sends the first information to a fourth device, the first device resends the first information to the second device, and so on. The fourth device is a device other than the first device and the second device.

In an embodiment of the first aspect of this application, after the first device receives the second information sent by the second device, a connection relationship may be established between the first device and the second device, and the established connection relationship is maintained between the first device and the second device in the second time period. Specifically, if the first device sends the first information to the second device to request the second device to provide the resource assistance information for the first device, the second device may not send the second information to the first device to indicate that the second device can provide the resource assistance information for the first device, but directly sends the resource assistance information to the first device, so that the second device can continuously provide the resource assistance information for the first device, and in particular, directly provide the resource assistance information for the first device without sending the second information, thereby reducing information exchange between the first device and the second device, and further improving communication efficiency.

In an embodiment of the first aspect of this application, the connection relationship established between the first device and the second device in the second time period may be disconnected through signaling indication. For example, based on the foregoing embodiment, the communication method further includes: The first device receives interrupt information sent by the second device, where the interrupt information is used to indicate that the second device stops sending the resource assistance information to the first device based on the first information in the second time period.

After the connection relationship is established between the first device and the second device, the second device may send the interrupt information to the first device, so that after receiving the interrupt information, the first device disconnects the connection relationship established between the first device and the second device. In other words, the terminal information is used to indicate that the connection relationship fails. After this, if the first device sends the first information to the second device again, the second device further needs to send the second information to the first device before sending the resource assistance information to the first device again. In other words, in this case, after sending the first information, the first device needs to wait for the second information to determine that the second device provides the resource assistance information for the first device.

Alternatively, in another implementation, based on the foregoing embodiment, the method further includes: The first device receives interrupt information sent by the second device, where the interrupt information is used to indicate that the second device stops sending the resource assistance information to the first device in the second time period; or the first device sends the interrupt information to the second device.

After the connection relationship is established between the first device and the second device, the second device may send the interrupt information to the first device, so that after receiving the interrupt information, the first device disconnects the connection relationship established between the first device and the second device. Alternatively, the first device may send the interrupt information to the second device, so that after receiving the interrupt information, the second device disconnects the connection relationship established between the first device and the second device. After this, if the first device sends the first information to the second device again, the second device further needs to send the second information to the first device before sending the resource assistance information to the first device again.

In an embodiment of the first aspect of this application, the first information is carried in signaling sent by the first device to the second device, and the signaling is sidelink control information SCI or a MAC CE. The SCI includes first-level SCI and/or second-level SCI. Optionally, the signaling further includes one of a PSCCH (physical sidelink control channel), a PSSCH (physical sidelink shared channel), PC5 RRC, MAC, RRC, a SIB, and a MIB.

A second aspect of this application provides a communication method. A second device capable of providing resource assistance information can actively send second information to a first device to indicate, to the first device through the second information, that the second device can provide the resource assistance information, thereby reducing information exchange between the first device and the second device, and further improving communication efficiency of the first device. The second information indicates that the second device can provide the resource assistance information for the first device. Therefore, before performing sidelink communication, the first device determines that the second device can provide the resource assistance information for the first device, so that the first device can use the resource assistance information sent by the second device as a reference to finally determine a communication resource used when the first device performs sidelink communication with a third device, thereby improving communication efficiency of the first device during sidelink communication. The communication resource includes a time resource, a frequency resource, a time-frequency resource, and/or the like.

In an embodiment of the second aspect of this application, for the first device and the third device in sidelink communication, before sending sidelink communication data to the third device, the first device may further actively send first information to the second device to request to obtain the resource assistance information from the second device. Before receiving the first information, the second device may send the second information to the first device, so that if the first device receives the second information after sending the first information, the first device can at least determine, based on the second information, that the second device receives the first information, thereby ensuring reliability of the second information sent by the first device. In addition, the first device can determine, based on the second information, whether the second device provides the resource assistance information, so that the first device can follow up the second information in time to determine whether to continue to wait for the resource assistance information sent by the second device, or give up, as soon as possible, waiting for the second device to send the resource assistance information, so as to reduce a delay caused when the terminal device keeps waiting for the second device to provide the resource assistance information, thereby ensuring a delay requirement in data transmission, improving communication efficiency and transmission reliability of the first device during sidelink communication, and further improving spectrum utilization.

In an embodiment of the second aspect of this application, the second information may be used to indicate whether the second device provides the resource assistance information for the first device. When the second device determines that the second device can provide the resource assistance information for the first device, the second information sent by the second device indicates that the second device provides the resource assistance information for the first device. When the second device determines that the second device cannot provide the resource assistance information for the first device, the second information sent by the second device indicates that the second device does not provide the resource assistance information for the first device. After receiving the second information, the first device may determine, based on the second information, whether the second device can provide the resource assistance information for the first device.

Alternatively, the second information is only used to indicate that the second device provides the resource assistance information for the first device. If the first device does not receive the second information, it indicates that the second device does not provide the resource assistance information for the second device. When the second device determines that the second device can provide the resource assistance information for the first device, the second information sent by the second device indicates that the second device provides the resource assistance information for the first device. When the second device determines that the second device cannot provide the resource assistance information for the first device, the second device may not send the second information to the first device. When the first device does not receive the second information in a period of time, the first device may determine at least the following: the second device does not receive the first information, or the second device does not provide the resource assistance information for the first device. In this case, the first device may send the first information to the second device again, or send the first information to another device, or determine, in another manner, a resource used when the first device performs sidelink communication.

In an embodiment of the second aspect of this application, the second information sent by the second device to the first device is carried by a first channel, and the first channel may be a PSFCH. In this case, the PSFCH carries the second information, so that this embodiment is easy to implement and is universal. Alternatively, the first channel may be a newly defined channel, and the newly defined channel may be, for example, a PSRCH. In this case, the second information is carried by the new channel, so that expression of another existing channel is not affected when the newly added second information in this embodiment is exchanged.

In an embodiment of the second aspect of this application, when the second information is carried by the first channel and the second information can be used to indicate whether the second device provides the resource assistance information for the first device, the second information may correspond to different sequence cyclic shift values of the first channel to indicate "yes" or "no". For example, when the second information indicates that the second device provides the resource assistance information for the first device, the second information may correspond to a first sequence cyclic shift value of the first channel; or when the second information indicates that the second device does not provide the resource assistance information for the first device, the second information corresponds to a second sequence cyclic shift value of the first channel.

Alternatively, when the second device is carried by the first channel and the second information is used to indicate that the second device provides the resource assistance information for the first device, the second information may correspond to a sequence cyclic shift value of the first channel to perform indication. For example, when the second information indicates that the second device provides the resource assistance information for the first device, the second information may correspond to a third sequence cyclic shift value of the first channel.

In an embodiment of the second aspect of this application, when the first channel carrying the second information is the PSFCH, the second information is specifically carried in a first resource set. A resource set used for transmitting a PSFCH resource that carries the second information is denoted as the first resource set, and a resource set used for transmitting a PSFCH resource that carries an HARQ-ACK is denoted as a second resource set. Therefore, the first resource set and the second resource are complementary sets of each other in terms of PSFCH resource. The first resource set may be specifically indicated in a form of a bitmap. In this embodiment, a complementary set of resources of the resource set used for transmitting the PSFCH resource that carries the HARQ-ACK is properly used to improve spectrum utilization efficiency. In addition, the complementary set of resources can be used to transmit the second information, thereby providing transmission reliability of the first device.

In an embodiment of the second aspect of this application, it is denoted that the first device sends the first information to the second device in a first slot and the second device sends the second information to the first device in a second slot (which may be understood as that the first device receives the second information from the second device in the second slot). In this case, a relative relationship between the first slot and the second slot may meet at least the following condition: the second slot is the 1st slot that includes the PSFCH and that is after a slot in which the last symbol of the first information is located, or the second slot may be the 1st slot that includes the PSFCH and that is at an interval of N time units from the first slot, or a time interval between the first slot and the second slot is N time units.

In an embodiment of the second aspect of this application, the second information sent by the second device to the first device may be carried in a resource set used for transmitting the first channel. The resource set used for transmitting the first channel and a resource set used for transmitting the PSFCH are configured independently, and optionally, may be configured through frequency division multiplexing.

In an embodiment of the second aspect of this application, the second information may correspond to one or more bits of the first channel, where the one or more bits may be used to simultaneously indicate whether the second device provides the resource assistance information for the first device or indicate that the second device provides the resource assistance information for the first device, and indicate whether the second device successfully receives data sent by the first device. Therefore, the second device may not need to use different resources to distinguish between HARQ information and the second information that are sent by the second device, but carries the HRAR information and the second information by jointly using one or more bits. In addition, the second information provided in this embodiment may be carried in a resource set used for transmitting a PSFCH resource.

In an embodiment of the second aspect of this application, it is denoted that the first device sends the first information to the second device in a first slot and the second device sends the second information to the first device in a second slot (the first device receives the second information from the second device in the second slot). A relative relationship between the first slot and the second slot may meet at least the following condition: the second slot is the 1st slot that includes the PSFCH and that is after a time interval of the first slot plus M time units, or a time interval between the first slot and the second slot is M time units. The time interval is configured in a resource pool, and the slot may be a logical slot in the resource pool, or may be a physical slot in the resource pool and outside the resource pool.

In an embodiment of the second aspect of this application, after the first device receives the second information sent by the second device (which may be understood as that the first device receives the second information from the second device), where the second information indicates that the second device provides the resource assistance information for the first device, the second device may no longer send the second information to the first device in a subsequent second time period, but the first device can receive the resource assistance information periodically sent by the second device. In other words, if the first device receives the second information from the second device, and the second information indicates that the second device provides the resource assistance information for the first device, the first device receives the periodical resource assistance information from the second device. This embodiment may be applied to a scenario in which the first device may frequently request to obtain the resource assistance information from a same second device in a short time, to reduce communication overheads and signaling overheads caused by frequent signaling interaction between the first device and the second device.

In an embodiment of the second aspect of this application, after the first device receives the second information sent by the second device, a connection relationship may be established between the first device and the second device, and the established connection relationship is maintained between the first device and the second device in the second time period. Specifically, if the first device sends the first information to the second device to request the second device to provide the resource assistance information for the first device, the second device may not send the second information to the first device to indicate that the second device can provide the resource assistance information for the first device, but directly sends the resource assistance information to the first device, so that the second device can continuously provide the resource assistance information for the first device, and in particular, directly provide the resource assistance information for the first device without sending the second information, thereby reducing information exchange between the first device and the second device, and further improving communication efficiency.

In an embodiment of the second aspect of this application, the connection relationship established between the first device and the second device in the second time period may be disconnected through signaling indication. For example, based on the foregoing embodiment, the communication method further includes: The first device receives interrupt information sent by the second device, where the interrupt information is used to indicate that the second device stops sending the resource assistance information to the first device based on the first information in the second time period.

After the connection relationship is established between the first device and the second device, the second device may send the interrupt information to the first device, so that after receiving the interrupt information, the first device disconnects the connection relationship established between the first device and the second device. In other words, the terminal information is used to indicate that the connection relationship fails. After this, if the first device sends the first information to the second device again, the second device further needs to send the second information to the first device before sending the resource assistance information to the first device again. In other words, in this case, after sending the first information, the first device needs to wait for the second information to determine that the second device provides the resource assistance information for the first device.

Alternatively, in another implementation, based on the foregoing embodiment, the method further includes: The first device receives interrupt information sent by the second device, where the interrupt information is used to indicate that the second device stops sending the resource assistance information to the first device in the second time period; or the first device sends the interrupt information to the second device.

After the connection relationship is established between the first device and the second device, the second device may send the interrupt information to the first device, so that after receiving the interrupt information, the first device disconnects the connection relationship established between the first device and the second device. Alternatively, the first device may send the interrupt information to the second device, so that after receiving the interrupt information, the second device disconnects the connection relationship established between the first device and the second device. After this, if the first device sends the first information to the second device again, the second device further needs to send the second information to the first device before sending the resource assistance information to the first device again.

In an embodiment of the second aspect of this application, the first information is carried in signaling sent by the first device to the second device, and the signaling is sidelink control information SCI or a MAC CE. The SCI includes first-level SCI and/or second-level SCI. Optionally, the signaling further includes one of a PSCCH (physical sidelink control channel), a PSSCH (physical sidelink shared channel), PC5 RRC, MAC, RRC, a SIB, and a MIB.

A third aspect of this application provides a communication method, including:

A first device sends first information to a second device, where the first information is used to request to obtain resource assistance information.

If the first device does not receive second information in a first time period, the first device sends the first information to a fourth device, or the first device sends the first information to the second device, or the first device determines a communication resource without using the resource assistance information, or the first device no longer waits to receive the second information, or the first device resends the first information. The second information indicates that the second device provides the resource assistance information for the first device, or the second information is specifically used to indicate whether the second device provides the resource assistance information for the first device, or the second information is the resource assistance information.

According to the communication method provided in this embodiment, for the first device and a third device in sidelink communication, before sending sidelink communication data to the third device, the first device sends the first information to the second device to request to obtain the resource assistance information from the second device. However, if the first device does not receive the second information in the first time period, the first device determines the communication resource in another manner instead of keeping waiting for a response or the resource assistance information of the second device, thereby reducing a delay. Moreover, in some cases, it is assumed that the second device provides the resource assistance information for the first device after an interval of a relatively long time. In this case, the resource assistance information cannot provide a gain for the first device to determine the communication resource, and the first device needs to determine the resource assistance information in another manner immediately after the first time period. Therefore, this embodiment can also ensure a delay requirement and reliability of data transmission, and improve time validity of the resource assistance information.

In an implementation, the first time period may be configured by a network device, and specifically, may be one of an RRC message, a MAC message, a MAC CE message, a MIB message, and a SIB message. The first time period may be associated with a resource pool and may be maintained by a timer of the first device. To be specific, the first device activates the timer after sending the first message, where a length of the timer is the first time period, and the first device waits to receive the second information in the first time period. The length of the timer is configured by the network device.

For specific implementation of the first information and the second information, refer to the description according to any implementation of the second aspect of this application. Details are not described again.

A fourth aspect of this application provides a communication apparatus, which may be configured to perform the communication method according to any implementation of the first aspect of this application. The apparatus may include a processing module and a communication module. The communication module may be configured to implement communication between the communication apparatus and another apparatus, and the processing module may be configured to perform the communication method according to any implementation of the first aspect.

In an embodiment of the fourth aspect of this application, the communication module may be configured to receive second information from a second device.

In an embodiment of the fourth aspect of this application, the communication module may be further configured to send first information to the second device.

For specific description of the first information and the second information, refer to the description according to the first aspect of this application.

In an embodiment of the fourth aspect of this application, the communication module is further configured to send the first information to a fourth device.

In an embodiment of the fourth aspect of this application, the communication module may be further specifically configured to send the first information to the second device in a second time period, and receive resource assistance information sent by the second device based on the first information.

For technical effects achieved by the communication apparatus described in the fourth aspect of this application, refer to the communication method corresponding to the first aspect. Details are not described again.

A fifth aspect of this application provides a communication apparatus, which may be configured to perform the communication method according to any implementation of the second aspect of this application. The apparatus may include a processing module and a communication module. The communication module may be configured to implement communication between the communication apparatus and another apparatus, and the processing module may be configured to perform the communication method according to any implementation of the second aspect.

In an embodiment of the fifth aspect of this application, the communication module may be configured to send second information to a first device.

In an embodiment of the fifth aspect of this application, the communication module may be configured to receive first information sent by the first device.

For specific description of the first information and the second information, refer to the description according to the second aspect of this application.

In an embodiment of the fifth aspect of this application, the communication module may be further configured to send resource assistance information to the first device at least once in a second time period.

In an embodiment of the fifth aspect of this application, the communication module may be further specifically configured to receive the first information from the first device in the second time period. The processor may be configured to send the resource assistance information to the second device based on the first information.

For technical effects achieved by the communication apparatus described in the fifth aspect of this application, refer to the communication method corresponding to the second aspect. Details are not described again.

A sixth aspect of this application provides a communication apparatus, which may be configured to perform the communication method according to any implementation of the third aspect of this application. The apparatus may include a processing module and a communication module. The communication module may be configured to implement communication between the communication apparatus and another apparatus, and the processing module may be configured to perform the communication method according to any implementation of the first aspect.

In an embodiment of the sixth aspect of this application, the communication module may be configured to send first information to a second device. Subsequently, if the communication module does not receive second information in a first time period, the communication module is further configured to send the first information to a fourth device, or the communication module is further configured to send the first information to the second device, or the communication apparatus determines a communication resource without using resource assistance information.

For technical effects achieved by the communication apparatus described in the sixth aspect of this application, refer to the communication method corresponding to the third aspect. Details are not described again.

According to a seventh aspect, an embodiment of this application provides a communication apparatus, including a processor and a communication interface.

The communication interface is configured to implement communication between the communication apparatus and an external connection.

The processor is configured to implement the method according to the first aspect, the second aspect, the third aspect, the fourth aspect, the fifth aspect, or the sixth aspect.

In a possible design, the communication apparatus further includes a memory.

The memory is configured to store a computer program. The processor executes the computer program stored in the memory, so that the apparatus performs the method according to the first aspect, the second aspect, the third aspect, the fourth aspect, the fifth aspect, or the sixth aspect.

In a possible design, the communication apparatus further includes a transceiver.

The transceiver is configured to receive and transmit a message.

According to an eighth aspect, an embodiment of this application provides a computer-readable storage medium, and the computer-readable storage medium stores a computer program. When the computer program is run, the method according to the first aspect, the second aspect, or the third aspect is implemented.

According to a ninth aspect, an embodiment of this application provides a chip, including a processor and a communication interface.

The communication interface is configured to implement communication with another device.

The processor is configured to read instructions to implement the method according to the first aspect, the second aspect, or the third aspect.

According to a tenth aspect, an embodiment of this application provides a computer program product, and the computer program product includes computer program code. When the computer program code is executed by a computer, the computer is enabled to perform the method according to the first aspect, the second aspect, or the third aspect.

According to an eleventh aspect, an embodiment of this application provides a communication system. The communication system includes the communication apparatus according to any implementation of the fourth aspect of this application to serve as a first device, and the communication apparatus according to any implementation of the fifth aspect of this application to serve as a second device; or includes the communication apparatus according to any implementation of the sixth aspect of this application to serve as the first device, and the communication apparatus according to any implementation of the fifth aspect of this application to serve as the second device.

**BRIEF DESCRIPTION OF DRAWINGS**

FIG. 1 is a schematic diagram of an architecture of a communication system to which an embodiment of this application can be applied;

FIG. 2 is a schematic diagram of a V2X scenario applied to this application;

FIG. 3 is a schematic diagram of a slot structure used when a V2X communication apparatus in a communication system performs sidelink communication;

FIG. 4 is a schematic diagram of another slot structure used when a V2X communication apparatus performs sidelink communication;

FIG. 5 is a schematic diagram of performing sidelink communication by a terminal device;

FIG. 6 is a schematic flowchart of an embodiment of a communication method according to this application;

FIG. 6A is a schematic flowchart of an embodiment of a communication method according to this application;

FIG. 7 is a schematic flowchart of an embodiment of a communication method according to this application;

FIG. 7A is a schematic flowchart of an embodiment of a communication method according to this application;

FIG. 8 is a schematic diagram of a slot structure;

FIG. 9 is a schematic flowchart of an embodiment of a communication method according to this application;

FIG. 10 is a schematic flowchart of an embodiment of a communication method according to this application;

FIG. 11 is a schematic flowchart of an embodiment of a communication method according to this application;

FIG. 12 is a schematic flowchart of an embodiment of a communication method according to this application;

FIG. 13 is a schematic flowchart of an embodiment of a communication method according to this application;

FIG. 14 is a schematic flowchart of an embodiment of a communication method according to this application;

FIG. 15 is a schematic flowchart of an embodiment of a communication method according to this application;

FIG. 16 is a schematic diagram of a structure of an embodiment of a communication apparatus according to this application; and

FIG. 17 is a schematic diagram of a structure of an embodiment of a communication apparatus according to this application.

## DESCRIPTION OF EMBODIMENTS

Before embodiments of this application are introduced, an application scenario of this application and a technical problem existing in the application scenario are described below with reference to the accompanying drawings.

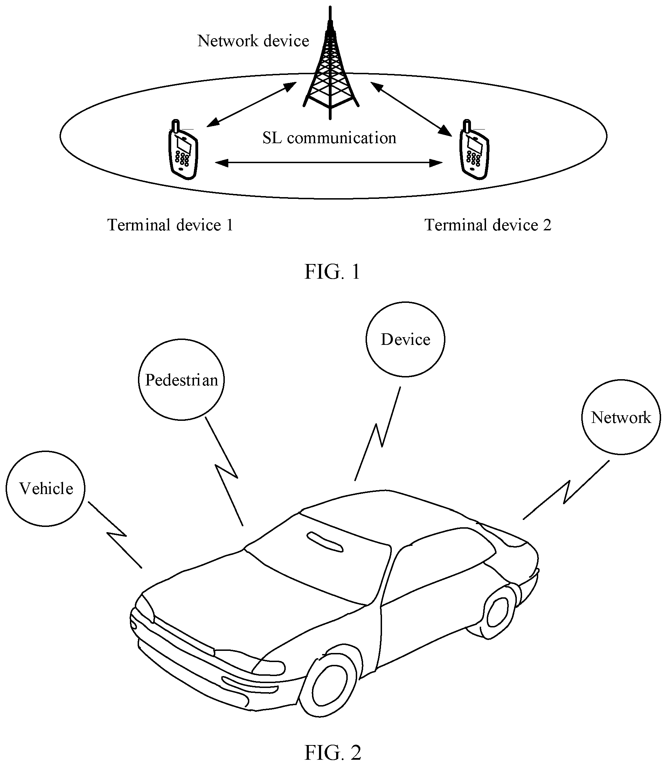

FIG. 1 is a schematic diagram of an architecture of a communication system to which an embodiment of this application can be applied. The communication system shown in FIG. 1 includes a network device and at least one terminal device (for example, a terminal device 1 and a terminal device 2 in FIG. 1), and the terminal device may be connected to the network device in a wireless or wired manner. FIG. 1 is merely a schematic diagram, and the communication system may further include other network devices, for example, may further include a wireless relay device and a wireless backhaul device, which are not drawn in FIG. 1. A quantity of network devices and a quantity of terminal devices included in the mobile communication system are not specifically limited in embodiments of this application.

In embodiments of this application, the network device may be an access device wirelessly accessing the mobile communication system, and may be a base station (base station, BS), for example, a NodeB (NodeB) in a third generation (third generation, 3G) communication system, an evolved NodeB (evolved NodeB, eNodeB) in a Long Term Evolution (Long Term Evolution, LTE) communication system, a gNodeB or gNB in a 5G mobile communication system, a base station in a future mobile communication system, or an access node in a wireless fidelity (wireless fidelity, Wi-Fi) system. A specific technology and a specific device form used by the accessed network device are not limited in embodiments of this application.

In embodiments of this application, the terminal device may also be referred to as a terminal (terminal). The terminal device may be user equipment (user equipment, UE), a mobile station (mobile station, MS), a mobile terminal device (mobile terminal, MT), or the like. The terminal device may alternatively be a mobile phone (mobile phone), a tablet computer (Pad), a computer with a wireless receiving/transmission function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical surgery (remote medical surgery), a wireless terminal device in a smart grid (smart grid), a wireless terminal device in transportation safety (transportation safety), a wireless terminal device in a smart city (smart city), a wireless terminal device in a smart home (smart home), a device in a V2X (vehicle to everything) system, or the like.

To improve communication efficiency of the communication system and reduce network load, the communication system shown in FIG. 1 includes some communication systems including an LTE communication system and an NR communication system, and sidelink (sidelink, SL) communication may be performed between terminal devices. The sidelink communication herein may also be referred to as sidelink communication or sidelink communication. Sidelink communication allows direct communication between the terminal devices. For example, in the system shown in FIG. 1, it is assumed that the terminal device 1 can serve as a transmit end in sidelink communication to send data to the terminal device 2, and the terminal device 2 can serve as a receive end in sidelink communication to receive the data sent by the terminal device 1. However, in the foregoing sidelink communication process, the network device does not directly participate in the step of sending the data to the terminal device 2 by the terminal device 1, that is, the data of the terminal device 1 directly reaching the terminal device 2 from the terminal device 1 without passing through the network device, thereby implementing direct end-to-end transmission of the data. It should be noted that in addition to providing one-to-one communication, sidelink communication may further provide a one-to-many sidelink communication manner, and one-to-one sidelink communication and one-to-many sidelink communication may further be divided into communication including a relay node and communication including no relay node. The example in FIG. 1 of this application is described by using only one-to-one communication in sidelink communication as an example, and a quantity of terminal devices and whether a relay node is included in sidelink communication are not limited.

In a special application scenario, FIG. 2 is a schematic diagram of a vehicle to everything (vehicle to everything, V2X) scenario to which this application is applied. Specifically, in the V2X scenario shown in FIG. 2, a V2X communication apparatus may be disposed on a vehicle to enable the vehicle to perform communication. In this case, the V2X communication apparatus disposed on each vehicle may serve as the terminal device shown in FIG. 1. In this way, through the disposed V2X communication apparatus, the vehicle in the figure may perform vehicle to vehicle (vehicle to vehicle, V2V) communication with another vehicle, perform vehicle to pedestrian (vehicle to pedestrian, V2P) communication with another pedestrian, perform vehicle to infrastructure (vehicle to infrastructure, V2I) communication with another roadside infrastructure, or perform vehicle to network (vehicle to network, V2N) communication with a communication network. V2X communication can implement omnidirectional connection and efficient information exchange between the vehicle and each of a pedestrian, another vehicle, a roadside device, and a network, to implement functions such as an information service, traffic safety, and traffic efficiency. In addition, with development of the network technology and the intelligent vehicle technology, the vehicle can implement increasingly richer functions through the V2X communication apparatus. For example, the V2X communication apparatus can obtain various information services through V2I and V2N, including traffic light information, information about a vehicle in a nearby region, vehicle navigation information, emergency rescue information, entertainment service information, and the like. Through V2V and V2P communication, the V2X communication apparatus can obtain, in real time, information such as a vehicle speed, a location, and a vehicle driving condition that are of a surrounding vehicle, and a pedestrian activity, and implement a collision warning function by using an intelligent algorithm to prevent the vehicle from encountering a traffic accident. The V2X communication apparatus can implement a function such as vehicle speed guiding through V2I communication to improve traffic efficiency.

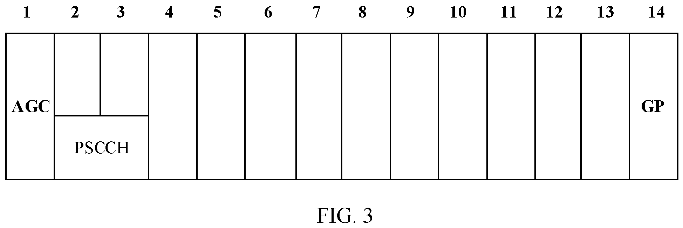

In various embodiments of this application, the V2X communication apparatus shown in FIG. 2 may serve as the terminal device shown in FIG. 1, and sidelink communication performed between V2X communication apparatuses is used as an example rather than a limitation. For example, FIG. 3 is a schematic diagram of a slot structure used when a V2X communication apparatus in a communication system performs sidelink communication. The communication system may be, for example, a new radio (new radio, NR) communication system.

Specifically, in a case of a normal cyclic prefix (NCP), one time unit (slot, slot), a V2X slot structure may include 14 symbols. A quantity of symbols in one slot that are used to carry a physical sidelink control channel (physical sidelink control channel, PSCCH) used for sidelink communication may be configured in each resource pool, and may be specifically 2 or 3. For example, in a slot shown in FIG. 3, a symbol 2 and a symbol 3 may be used to carry the PSCCH. In addition, a quantity of candidate physical resource blocks (physical resource block) PRBs of the PSCCH may also be configured in each resource pool. The PSCCH is carried in a subchannel, and the PSCCH carries first-level sidelink control information (SCI). In addition, in each slot shown in FIG. 3, the first symbol may be used for automatic gain control (AGC), the last symbol is a guard interval, and the remaining symbols may be used to send data and second-level SCI.

In some communication systems, the V2X communication apparatus may also support sidelink communication performed in a unicast manner, a multicast manner, or the like. The communication system may be, for example, an NR communication system. When the V2X communication apparatus performs unicast and multicast, a hybrid automatic repeat request (hybrid automatic repeat request, HARQ) technology is also required to ensure correctness of data transmitted through unicast and multicast.

The HARQ technology combines FEC with ARQ to encode a data block (or referred to as a transport block (TB)), and then a transmit end sends an information bit and a part of redundant bits at the first time of transmission. If a receive end can correctly perform decoding, the receive end feeds back an ACK signal to the transmit end. After confirming that the receive end successfully receives the corresponding information bit, the transmit end can consider that the sent TB is successfully transmitted. However, if the receive end cannot correctly decode the information bit, the receive end feeds back a NACK to the transmit end, and then the transmit end further transmits a part of information bits and/or redundant bits to the receive end. This process may be referred to as data retransmission. After receiving the retransmitted data, the receive end performs decoding after combining the retransmitted data with the previously received data, and if the receive cannot normally performs decoding in combination with the retransmitted redundant bits, the transmit end performs retransmission. As a quantity of retransmissions increases, the redundant bits continuously accumulate and a channel encoding rate continuously decreases, so that a better decoding effect can be obtained.

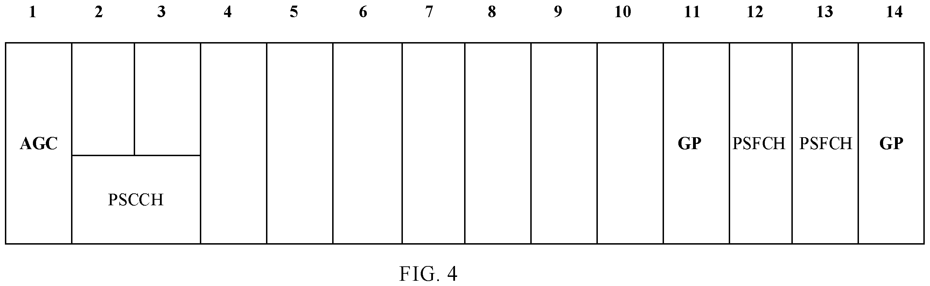

When the V2X communication apparatus performs sidelink communication, HARQ information transmitted by the receive end is carried by a feedback channel. The feedback channel may be a physical sidelink feedback channel (physical sidelink feedback channel, PSFCH). Specifically, FIG. 4 is a schematic diagram of another slot structure used when a V2X communication apparatus performs sidelink communication. In an example shown in FIG. 4 in which a communication system has an NR V2X slot structure, a sequence-based PSFCH format supporting one symbol may be used to carry a 1-bit ACK or a 1-bit NACK or carry only a NACK. For example, a PSFCH resource may be periodically configured in a resource pool, and a configuration periodicity of the PSFCH resource may be N slots, where N may be 0, 1, 2, or 4. "N=0" indicates that there is no HARQ feedback resource, that is, HARQ feedback is disabled. When N is 1, 2, or 4, it indicates that there is one PSFCH resource every 1, 2, or 4 slots. In the slot shown in FIG. 4, "N=1" is used as an example. In addition, a time interval (feedback timing) between a physical sidelink shared channel (physical sidelink shared channel, PSSCH) and a PSFCH may be defined as follows: Assuming that the last symbol occupied for PSSCH transmission is in a slot n, HARQ information corresponding to data carried by the PSSCH may be in a slot (n+a), where a is a minimum positive integer greater than or equal to K, and K is a minimum time interval between the PSSCH and the PSFCH, which may be 2 or 3.

Further, in the system shown in FIG. 1, although there may be no direct participation of the network device when data is transmitted between terminal devices through sidelink communication, a communication resource used when the terminal devices perform sidelink communication with each other to send data and receive data still needs to be configured by the network device in some scenarios. Therefore, the terminal device can perform sidelink communication using a legal and appropriate communication resource or communication manner, to improve sidelink communication efficiency of the terminal device, and prevent the resource used by the terminal device in sidelink communication from interfering with another terminal device or another communication manner.

There are two manners of obtaining a resource in a sidelink: a mode 1 and a mode 2. In the mode 1, a terminal device sends request information to a network device such as a base station, to obtain a resource. In the mode 2, a terminal device autonomously determines a resource, and a resource selection manner includes sensing (sensing), partial sensing, or random selection.

In some cases, when a terminal device serving as a transmit end encounters relatively large amount of interference due to some reasons when determining a communication resource used for sidelink communication, reliability of data transmission cannot be ensured. For example, due to a hidden node, when performing sensing, the terminal device does not detect a resource occupied by the hidden node, but a terminal device serving as a receive end can detect the resource occupied by the hidden node. As a result, reliability of the data transmission is reduced, and a probability of a transmission collision is increased. Alternatively, the terminal device cannot determine a communication resource due to power saving, for example, the terminal device cannot determine the communication resource through sending. Therefore, to enable a terminal device to can still perform sidelink communication, and ensure reliability of data transmission, in some technologies, the terminal device may send assistant resource request information to another terminal device, to request the another terminal device to provide resource assistance information for the terminal device, so that the terminal device can determine, based on the resource assistance information provided by the another terminal device, a communication resource used by the terminal device to perform sidelink communication performed, and finally can perform sidelink communication.

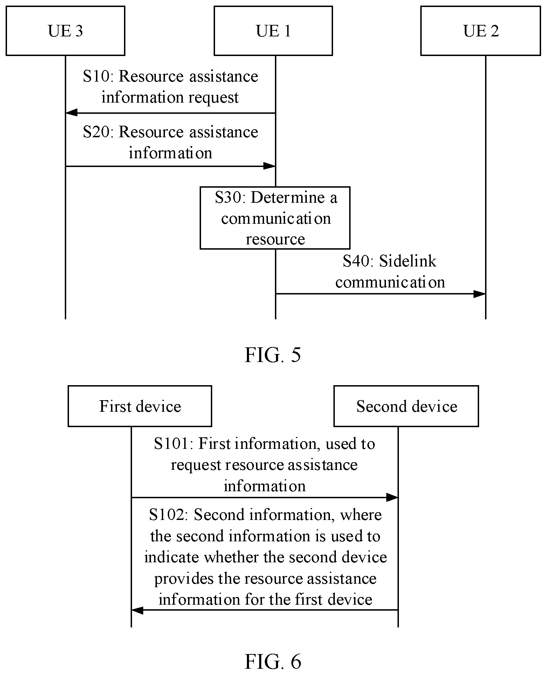

For example, FIG. 5 is a schematic diagram of sidelink communication performed by a terminal device. A terminal device sending data during sidelink communication is denoted as UE 1, and a terminal device receiving the data of the UE 1 is denoted as UE 2. To perform sidelink communication with the UE 2, in S10, the UE 1 sends a resource assistance information request to UE 3. The UE 3 may be a closest device around the UE 2, may be UE with a same type and parameter as the UE 1, or may be the UE 2. Specific implementation of the UE 3 is not limited in this application, and any UE can be used as the UE 3 provided that the UE can provide resource assistance information for the UE 1. Subsequently, in S20, the UE 1 receives resource assistance information sent by the UE 3, and in S30, uses the received resource assistance information as a reference to determine a communication resource used by the UE 1 during sidelink communication (actually, the resource assistance information sent by the UE 3 may or may not be used). Finally, in S40, the UE 1 may send data to the UE 2 by using the determined communication resource to perform sidelink communication.

However, in the technology shown in FIG. 5, after the UE 1 sends the resource assistance information request to the UE 3 through S10, if the UE 3 does not receive the request, or the UE 3 cannot provide the resource assistance information for the UE 1, or the UE 3 refuses to provide the resource assistance information for the UE 1, the UE1 cannot receive the resource assistance information through S20. In this case, the UE 1 either repeatedly sends the request to the UE 3 a plurality of times, or continues to wait for a relatively long time before giving up obtaining the resource assistance information from the UE 3, and then continues to determine the communication resource in another manner. In this process, the request sent by the UE 1 to the UE 3 is meaningless, and a delay generated when the UE 1 determines the communication resource used during sidelink communication is further increased. Consequently, communication efficiency of the UE 1 during sidelink communication is reduced.

Therefore, this application provides a communication method and apparatus. After a terminal device that performs sidelink communication sends a resource assistance information request, the terminal device that performs sidelink communication can determine, based on feedback of a terminal device that receives the resource assistance information, whether the terminal device can provide resource assistance information, so that not only reliability of to-be-transmitted data can be ensured, but also a delay that is of the terminal device that performs sidelink communication and that is caused when the terminal device that receives the resource assistance information cannot provide the resource assistance information can be reduced, thereby improving communication efficiency of the terminal device during sidelink communication.

Specific embodiments are used below to describe in detail the technical solutions of this application. The following several specific embodiments may be combined with each other, and a same or similar concept or process may not be described repeatedly in some embodiments.

**Embodiment 1**

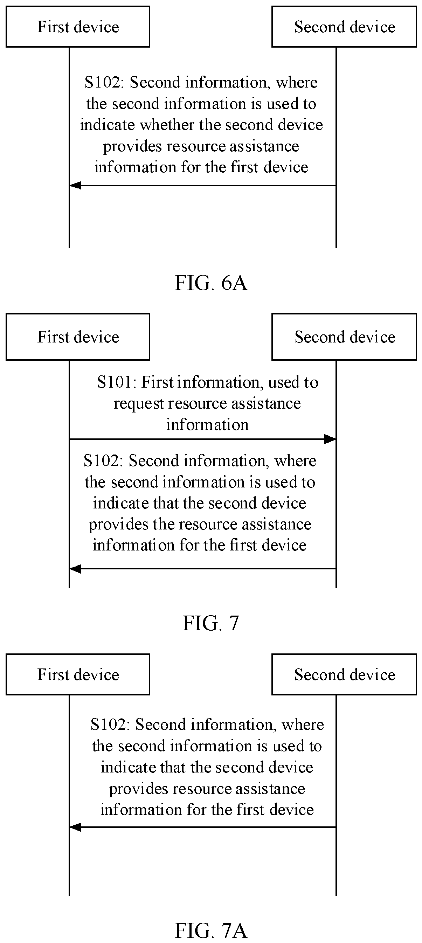

FIG. 6 is a schematic flowchart of an embodiment of a communication method according to this application. The method shown in FIG. 6 may be applied to a scenario shown in FIG. 1 in which sidelink communication is performed between terminal devices. In addition, a terminal device sending data during sidelink communication is denoted as a first device, and a terminal device receiving data during sidelink communication is denoted as a third device. Specifically, the method provided in this embodiment includes the following steps.

S101: The first device sends first information to a second device, where the first device is used to request resource assistance information from the second device. Correspondingly, the second device receives the first information from the first device.

Specifically, before performing sidelink communication, that is, before sending sidelink communication data to the third device, the first device needs to determine an available communication resource, including a time domain resource, a frequency domain resource, a time-frequency resource, and the like. To determine the communication resource, the first device may request the resource assistance information from the second device. After the second device sends the resource assistance information to the first device, the first device may refer to the received resource assistance information to determine the communication resource. The second device may be any device that can provide the resource assistance information for the first device, for example, another terminal device located near the third device. The requesting the resource assistance information may be understood as requesting resource information, requesting time-frequency resource information, requesting time domain resource information, or requesting frequency domain resource information. Requesting may be understood as obtaining, which is not limited in this application. The resource assistance information may be understood as the time-frequency resource information, the resource information, the time domain resource information, or the frequency domain resource information.

Optionally, the first device may send, during sidelink communication, the first information to the second device to request the resource assistance information. In this case, the first information may be sent to a same second device or different second devices each time. Alternatively, in some specific implementations, when the first device is a hidden node and cannot obtain a reliable communication resource, or when the first device chooses to send a resource assistance information request to obtain a resource to save power, the first device cannot directly determine a communication resource, or reliability of data transmission cannot be ensured if the first device directly determines the communication resource. In this case, the terminal device may send the first information to the second device.

In a specific implementation, the first information may be carried in control signaling sent by the first device to the second device, and the control signaling may be sidelink control information (sidelink control information, SCI) or a MAC CE. The SCI may be first-level SCI or may be second-level SCI. The first information may be a bit in the SCI, that is, a bit in the SCI is used to indicate whether the first device requests the resource assistance information from the second device. For example, when a value of a bit in the SCI sent by the first device to the second device is "1", it indicates that the first device sends the first information to the second device. In this case, the first device requests the second device to provide the resource assistance information. When a value of a bit in the SCI sent by the first device to the second device is "0", it indicates that the first device does not request the second device to provide resource assistance information. In addition, a PSSCH scheduled by the SCI may also carry one or more of the following parameters: a priority, a used resource pool, a remaining data delay (packet delay budget, PDB), a quantity of subchannels, a reservation periodicity, and the like. The priority may be a priority of data sent by the first device to the third device. The used resource pool may be a common resource pool used by the first device and the third device to perform sidelink communication. The remaining PDB may be a time window, and the first device expects to receive the resource assistance information in the time window. The quantity of subchannels is a frequency domain granularity of a selected resource used in sensing. The reservation periodicity is a type of a service to be sent by the first device, including an aperiodic service, a periodic service, a period length, and the like.

Alternatively, in another specific implementation, the first information may be SCI sent by the first device to the second device. The SCI is a new SCI format. The SCI format is dedicated to requesting assistance resource information. For example, fields carried by the SCI format includes one or more of the following parameters: a priority, a used resource pool, a remaining PDB, a quantity of subchannels, and a reservation periodicity. Optionally, the SCI may be first-level SCI or second-level SCI.

S102: The second device sends second information to the first device, where the second information is used to indicate that the second device provides the resource assistance information for the first device, or the second information is used to indicate that the second device does not provide the resource assistance information for the first device. Correspondingly, the first device receives the second information sent by the second device, so that the first device can determine, based on the second information, whether the second device provides the resource assistance information for the first device.

Specifically, in the communication method provided in this embodiment, after receiving the first information sent by the first device, the second device can send the second information to the first device in S102 regardless of whether the second device can provide the resource assistance information for the first device. For example, when the second device determines that the second device can provide the resource assistance information for the first device, the second information sent by the second device in S 102 indicates that the second device provides the resource assistance information for the first device. When the second device determines that the second device cannot provide the resource assistance information for the first device, the second information sent by the second device in S 102 indicates that the second device does not provide the resource assistance information for the first device. After receiving the second information, the first device may determine, based on the second information, whether the second device can provide the resource assistance information for the first device.

More specifically, the second information provided in this embodiment may be carried by a PSFCH, and a correspondence between the second information and a sequence cyclic shift value of the PSFCH is shown in Table 1 below:

**Table 1**

| Second information | Indicate that the resource assistance information is provided | Indicate that the resource assistance information is not provided |
|---|---|---|
| Sequence cyclic shift value | 6 | 0 |

Specifically, in this embodiment, two results indicated by the second information for whether the second device provides the resource assistance information for the first device are "yes" and "no", which may respectively correspond to two values of the sequence cyclic shift value of the PSFCH. For example, in the example shown in Table 1, when the second information indicates that the second device provides the resource assistance information for the first device, the second information corresponds to a first sequence cyclic shift value "6" of the PSFCH. When receiving the sequence cyclic shift value 6 of the PSFCH, the first device determines that the second device provides the resource assistance information for the first device. When the second information indicates that the second device does not provide the resource assistance information for the first device, the second information corresponds to a second sequence cyclic shift value "0" of the PSFCH. When receiving the sequence cyclic shift value 0 of the PSFCH, the first device determines that the second device does not provide the resource assistance information for the first device.

Alternatively, in the example shown in Table 2, when the second information indicates that the second device provides the resource assistance information for the first device, the second information corresponds to a first sequence cyclic shift value "0" of the PSFCH; or when the second information indicates that the second device does not provide the resource assistance information for the first device, the second information corresponds to a second sequence cyclic shift value "6" of the PSFCH.

**Table 2**

| Second information | Indicate that the resource assistance information is provided | Indicate that the resource assistance information is not provided |
|---|---|---|
| Sequence cyclic shift value | 0 | 6 |

Further, in this embodiment, a resource carrying the second information may be a PSFCH resource in a first resource set. A resource set used for transmitting a PSFCH resource that carries the second information is denoted as a first resource set, and a resource set used for transmitting a PSFCH resource that carries an HARQ-ACK is denoted as a second resource set.

In an implementation, the first resource set and the second resource set are complementary sets of each other. In addition to sending the second information to the first device by using the PSFCH, the second device may further send HARQ information to the first device by using the PSFCH. Therefore, in this embodiment, the second device divides PSFCH resources into different resource sets, to distinguish between a PSFCH carrying the second information and a PSFCH carrying the HARQ-ACK, thereby distinguishing between the HARQ information and the second information that are sent by the second device. A complementary set of resources of the resource set used for transmitting the PSFCH resource that carries the HARQ-ACK is properly used to improve spectrum utilization efficiency. In addition, the complementary set of resources can be used to transmit the resource assistance information, thereby providing transmission reliability of the first device.

In a specific implementation, the first resource set and the second resource set may be represented by using different bitmaps (bitmap). In other words, a network device independently configures the first resource set and the second resource set by using different bitmaps. The different bitmaps may be of a same length. For example, the following Table 3 shows a corresponding bitmap that indicates the resource set used for transmitting the PSFCH resource that caries the second information, and Table 4 shows a corresponding bitmap that indicates the resource set used for transmitting the PSFCH resource that carries the HARQ information. Table 3 and Table 4 are simplified illustrations. There are 10 resource blocks (resource block, RB) in frequency domain, and the RB may be a physical resource block (physical resource block, PRB). There are six slots in time domain, and a PSFCH resource periodicity is 2, to be specific, there is a PSFCH resource in one slot of every two slots. The illustrated parameters are not limited in this application.

**Table 3**

|  | Slot n | Slot n+1 | Slot n+2 | Slot n+3 | Slot n+4 | Slot n+5 |
|---|---|---|---|---|---|---|
| RB 1 |  | 0 |  | 0 |  | 0 |
| RB 2 |  | 0 |  | 0 |  | 0 |
| RB 3 |  | 0 |  | 0 |  | 0 |
| RB 4 |  | 0 |  | 0 |  | 0 |
| RB 5 |  | 1 |  | 1 |  | 1 |
| RB 6 |  | 1 |  | 1 |  | 1 |

**Table 4**

|  | Slot n | Slot n+1 | Slot n+2 | Slot n+3 | Slot n+4 | Slot n+5 |
|---|---|---|---|---|---|---|
| RB 1 |  | 1 |  | 1 |  | 1 |
| RB 2 |  | 1 |  | 1 |  | 1 |
| RB 3 |  | 1 |  | 1 |  | 1 |
| RB 4 |  | 1 |  | 1 |  | 1 |
| RB 5 |  | 0 |  | 0 |  | 0 |
| RB 6 |  | 0 |  | 0 |  | 0 |

The resource set used for transmitting the PSFCH resource that caries the second information may be indicated by using "000011" in the bitmap in Table 3, and the resource set used for transmitting the PSFCH resource that carries the HARQ information may be indicated by using " 111100" in the bitmap in Table 4. It can be learned that in each of the slots n+1, n+3, and n+5, a PSFCH resource carrying the second information and a PSFCH resource carrying the HARQ information are complementary sets of each other.

In another specific implementation, the first resource set and the second resource set may be indicated by using a bitmap (bitmap) that indicates two resource sets. In other words, a network device jointly configures the first resource set and the second resource set by using a bitmap. For example, the following Table 5 shows a corresponding bitmap that indicates the resource set used for transmitting the PSFCH resource that caries the HARQ information. Table 5 is a simplified illustration. There are 10 RBs in frequency domain, there are six slots in time domain, and a PSFCH resource periodicity is 2, to be specific, there is a PSFCH resource in one slot of every two slots. The illustrated parameters are not limited in this application.

**Table 5**

|  | Slot n | Slot n+1 | Slot n+2 | Slot n+3 | Slot n+4 | Slot n+5 |
|---|---|---|---|---|---|---|
| RB 1 |  | 1 |  | 1 |  | 1 |
| RB 2 |  | 1 |  | 1 |  | 1 |
| RB 3 |  | 1 |  | 1 |  | 1 |
| RB 4 |  | 1 |  | 1 |  | 1 |
| RB 5 |  | 0 |  | 0 |  | 0 |
| RB 6 |  | 0 |  | 0 |  | 0 |

The resource set used for transmitting the PSFCH resource that caries the HARQ information is indicated by using "111100" in the bitmap in Table 5. Because the first resource set and the second resource set are complementary sets of each other, the resource set used for transmitting the PSFCH resource that carries the second information is a resource set corresponding to a location indicated by "0" in the bitmap in Table 5. It can be learned that in each of the slots n+1, n+3, and n+5, a PSFCH resource carrying the second information and a PSFCH resource carrying the HARQ information are complementary sets of each other.

In another implementation, the first resource set and the second resource set may be indicated by using different bitmaps (bitmap). In other words, a network device independently configures the first resource set and the second resource set by using different bitmaps. The different bitmaps are of different length. A bitmap corresponding to the first resource set is denoted as a first bitmap, and a bitmap corresponding to the second resource set is denoted as a second bitmap. A length of the first bitmap is less than or equal to a resource block RB indicated by 0 in the second bitmap. For example, the following Table 6 shows a corresponding bitmap that indicates the resource set used for transmitting the PSFCH resource that caries the second information, and Table 7 shows a corresponding bitmap that indicates the resource set used for transmitting the PSFCH resource that carries the HARQ information. Table 6 and Table 7 are simplified illustrations. There are 10 RBs in frequency domain, there are six slots in time domain, and a PSFCH resource periodicity is 2, to be specific, there is a PSFCH resource in one slot of every two slots. The illustrated parameters are not limited in this application.

**Table 6**

|  | Slot n | Slot n+1 | Slot n+2 | Slot n+3 | Slot n+4 | Slot n+5 |
|---|---|---|---|---|---|---|
| RB 5 |  | 1 |  | 1 |  | 1 |
| RB 6 |  | 1 |  | 1 |  | 1 |

**Table 7**

|  | Slot n | Slot n+1 | Slot n+2 | Slot n+3 | Slot n+4 | Slot n+5 |
|---|---|---|---|---|---|---|
| RB 1 |  | 1 |  | 1 |  | 1 |
| RB 2 |  | 1 |  | 1 |  | 1 |
| RB 3 |  | 1 |  | 1 |  | 1 |
| RB 4 |  | 1 |  | 1 |  | 1 |
| RB 5 |  | 0 |  | 0 |  | 0 |
| RB 6 |  | 0 |  | 0 |  | 0 |

The resource set used for transmitting the PSFCH resource that caries the second information may be indicated by using "11" in the bitmap in Table 6, and the resource set used for transmitting the PSFCH resource that carries the HARQ information may be indicated by using "111100" in the bitmap in Table 7. It can be learned that in each of the slots n+1, n+3, and n+5, a PSFCH resource carrying the second information and a PSFCH resource carrying the HARQ information are complementary sets of each other.

Optionally, it is denoted that the first device sends the first information to the second device in a first slot in S101 and the second device sends the second information to the first device in a second slot in S102. In this case, in some scenarios, a relative relationship between the first slot and the second slot may meet at least the following condition: the second slot is the 1st slot that includes the PSFCH and that is after a slot in which the last symbol of the first information is located, or the second slot may be the 1st slot that includes the PSFCH and that is at an interval of N time units from the first slot, where N is a positive integer. For example, the slot shown in FIG. 3 may be a slot including no PSFCH, and the slot shown in FIG. 4 may be a slot including the PSFCH.

In conclusion, according to the communication method provided in this embodiment, after the first device sends the first information to the second device, the second device sends the second information to the first device to indicate whether the second device provides the resource assistance information for the first device. Herein, whether the second device provides the resource assistance information for the first device may be understood as follows: the second information may be used to indicate that the second device provides the resource assistance information for the first device, or the second information is used to indicate that the second device does not provide the resource assistance information for the first device. Therefore, the first device can determine, based on the indication of the second information fed back by the second device, whether the second device can provide the resource assistance information. Therefore, the first device can determine at least the following based on the second information: ① The second device receives the first information, thereby ensuring reliability of the second information sent by the first device. ② Whether the second device provides the resource assistance information, so that the first device can follow up the second information in time to determine whether to continue to wait for the resource assistance information sent by the second device, or give up, as soon as possible, waiting for the second device to send the resource assistance information, so as to reduce a delay caused when the terminal device keeps waiting for the second device to provide the resource assistance information, thereby reducing a delay in data transmission, improving communication efficiency and transmission reliability of the first device during sidelink communication, and further improving spectrum utilization.

**Embodiment 2**

Further, in S102 in the foregoing embodiment, an example of the second information sent by the second device to the first device is given in a specific implementation, to be specific, the second information may indicate that the second device provides the resource assistance information for the first device, or may indicate that the second device does not provide the resource assistance information for the first device. This implementation is denoted as a first implementation. However, in a second implementation, the second information may be only used to indicate that the second device provides the resource assistance information for the first device, but is not used to indicate that the second device does not provide the resource assistance information for the first device.

FIG. 7 is a schematic flowchart of an embodiment of a communication method according to this application. In the method shown in FIG. 7, except for a correspondence that is between the second information and the sequence cyclic shift value of the PSFCH and that is shown in the following Table 8, other implementation is the same as that shown in FIG. 6. This embodiment may be understood as an equivalent replacement of the embodiment shown in FIG. 6.

Specifically, the second information in this embodiment may be carried by the PSFCH, and the correspondence between the second information and the sequence cyclic shift value of the PSFCH is shown in the following Table 8.

**Table 8**

| Second information | Indicate that the resource assistance information is provided | Indicate that the resource assistance information is not provided |
|---|---|---|
| Sequence cyclic shift value | 6 | N/A |

Specifically, in this embodiment, the second information indicates that the second device provides the resource assistance information for the first device, and corresponds to a value of the sequence cyclic shift value of the PSFCH. In the example shown in Table 8, when the second information indicates that the second device provides the resource assistance information for the first device, the second information corresponds to a third sequence cyclic shift value "6" of the PSFCH. When receiving the sequence cyclic shift value 6 of the PSFCH, the first device determines that the second device provides the resource assistance information for the first device. If the first device does not receive the PSFCH that carries the second information, the first device determines that the second device does not provide the resource assistance information for the first device. Therefore, compared with the implementation in Table 1 and Table 2 in Embodiment 1, in the implementation shown in Table 8, definition of the second information is changed, which is more efficient than Table 1 and Table 2, and reduces an amount of information sent by the second device, thereby improving system communication efficiency.

**Embodiment 3**

In the embodiment shown in FIG. 6, that a resource carrying the second information may be specifically the PSFCH resource in the first resource is used as an example. In another possible implementation, in S 102 shown in FIG. 6, the second information sent by the second device to the first device may alternatively be transmitted using a new PSFCH format. The new PSFCH format may carry a plurality of bits. The plurality of bits may be used to indicate the second information and the HARQ information. To be specific, the second information may be used to indicate whether the second device provides the resource assistance information for the first device, and indicate whether the second device successfully receives data sent by the first device. In other words, in this embodiment, the plurality of bits can indicate both the second information and the HARQ information, so that the second device can distinguish, without using different resources, between the HARQ information and the second information that are sent by the second device.

Specifically, in this embodiment, for example, the second information corresponds to corresponding 2 bits of the PSFCH format. A correspondence between the plurality of bits and each of the second information and the HARQ information may be shown in the following Table 9.

**Table 9**

| HARQ information+ Second information | NACK+ Indicate that the resource assistance information is not provided | NACK+ Indicate that the resource assistance information is provided | ACK+ Indicate that the resource assistance information is provided | ACK+ Indicate that the resource assistance information is not provided |
|---|---|---|---|---|
| Bit value | 00 | 01 | 11 | 10 |

A correspondence between a bit value and the HARQ information plus the second information is not limited in this application. The correspondence in Table 9 may alternatively be another correspondence. As shown in Table 9, when values of the 2 bits of the PSFCH are 00, this corresponds to NACK+ (plus or sum) indicating that the resource assistance information is not provided, that is, the second device does not successfully receive a PSSCH scheduled by a PSCCH, and the second device does not provide the resource assistance information for the first device. When the values of the 2 bits of the PSFCH are 01, this corresponds to NACK+ (plus or sum) indicating that the resource assistance information is provided, that is, the second device does not successfully receive the PSSCH scheduled by the PSCCH, and the second device provides the resource assistance information for the first device. When the values of the 2 bits of the PSFCH are 11, this corresponds to ACK+ (plus or sum) indicating that the resource assistance information is provided, that is, the second device successfully receives the PSSCH scheduled by the PSCCH, and the second device provides the resource assistance information for the first device. When the values of the 2 bits of the PSFCH are 10, this corresponds to ACK+ (plus or sum) indicating that the resource assistance information is not provided, that is, the second device successfully receives the PSSCH scheduled by the PSCCH, and the second device does not provide the resource assistance information for the first device.

In another possible implementation, in S102 shown in FIG. 6, the second information sent by the second device to the first device may alternatively be transmitted using a PSFCH. The PSFCH may carry 1 bit, and indicates the second information and the HARQ information by using different sequence cyclic offset values of the PSFCH. To be specific, 1 bit and a sequence cyclic shift of the PSFCH are used to indicate that the second device provides the resource assistance information for the first device, and indicate whether the second device successfully receives data sent by the first device. In other words, in this embodiment, the PSFCH can indicate both the second information and the HARQ information, so that the second device can distinguish, without using different resources, between the HARQ information and the second information that are sent by the second device.

Specifically, in this embodiment, for example, the second information corresponds to 1 bit in the PSFCH. A correspondence between each of the 1 bit and a sequence cyclic offset of the PSFCH and each of the second information and the HARQ information may be shown in the following Table 10.

**Table 10**

| HARQ-ACK information (HARQ-ACK value)+ Second information | NACK (an HARQ-ACK value is 0) | ACK (an HARQ-ACK value is 1) |
|---|---|---|
| Sequence cyclic shift value | $m_{cs}$=3 | $m_{cs}$=9 |

Table 10 shows a correspondence between a value of "$m_{cs}$=3" and the HARQ-ACK information. When a value of the 1 bit is 0 and the sequence cyclic shift is 3, this corresponds to NACK+ indicating that the resource assistance information is provided, that is, the second device does not successfully receive a PSSCH scheduled by a PSCCH, and the second device provides the resource assistance information for the first device. When the value of the 1 bit is 1, this corresponds to ACK+ indicating that the resource assistance information is provided, that is, the second device successfully receives the PSSCH scheduled by the PSCCH, and the second device provides the resource assistance information for the first device. In other words, the sequence cyclic shift value is used to indicate that the second device provides the resource assistance information for the first device, and indicate whether the second device successfully receives data from the first device.

Optionally, in this embodiment, it is denoted that the first device sends the first information to the second device in a first slot and the second device sends the second information to the first device in a second slot. A relative relationship between the first slot and the second slot may meet at least the following condition: the second slot is the 1st slot that includes the PSFCH and that is after the first slot plus M time units, where M is a positive integer. M may be 2 or 3, and the slot may be a logical slot in a resource pool.

Optionally, the second information in this embodiment may be carried in a resource set used for transmitting a PSFCH resource, that is, the PSFCH carrying the second information, and a frequency domain resource and/or a code domain resource of the PSFCH may be determined by using implicit association between a time domain location and a frequency domain location of the PSSCH. A rule for the implicit association is briefly described below.

A device (or referred to as a terminal device, UE) is provided with a set of $M_{\text{PRB, set}}^{\text{PSFCH}}$ PRBs in a resource pool, and the UE performs PSFCH transmission on one PRB in the set. A quantity of subchannels in the resource pool is denoted as $N_{\text{subch}}$, and a quantity of PSSCH slots associated with this PSFCH slot is denoted as $N_{\text{PSSCH}}^{\text{PSFCH}}$. The UE allocates $\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right]$ PRBs from the $M_{\text{PRB, set}}^{\text{PSFCH}}$ PRBs for a slot i and a subchannel j, where $M_{\text{subch, slot}}^{\text{PSFCH}} = M_{\text{PRB, set}}^{\text{PSFCH}}/\left(N_{\text{subch}} \cdot N_{\text{PSSCH}}^{\text{PSFCH}}\right), \ 0 \le i < N_{\text{PSSCH}}^{\text{PSFCH}}$, and $0 \le j < N_{\text{subch}}$. In addition, this allocation starts from an ascending order of i, and after traversal of i ends, an ascending order of j continues to be used for traversal. The UE expects $M_{\text{PRB, set}}^{\text{PSFCH}}$ to be a multiple of $N_{\text{subch}} \cdot N_{\text{PSSCH}}^{\text{PSFCH}}$. The UE determines, according to the formula $R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}$, a quantity of resources available for transmitting the PSFCH, where $N_{\text{CS}}^{\text{PSFCH}}$ is a quantity of cyclic pairs in the resource pool. If $N_{\text{type}}^{\text{PSFCH}} = 1$, $M_{\text{subch, slot}}^{\text{PSFCH}}$ PRBs are associated with a corresponding initial subchannel of the PSSCH. If $N_{\text{type}}^{\text{PSFCH}} = N_{\text{subch}}^{\text{PSSCH}}$, $N_{\text{subch}}^{\text{PSSCH}} \cdot M_{\text{subch, slot}}^{\text{PSFCH}}$ PRBs are associated with a corresponding one or more $N_{\text{subch}}^{\text{PSSCH}}$ subchannels of the PSSCH. $N_{\text{type}}^{\text{PSFCH}} = 1/N$ is configured in the resource pool. The PSFCH resources are first sorted in ascending order in $N_{\text{type}}^{\text{PSFCH}} \cdot M_{\text{subch, slot}}^{\text{PSFCH}}$ PRBs based on indexes of the PRBs, and then sorted in ascending order of indexes of $N_{\text{CS}}^{\text{PSFCH}}$ cyclic offset pairs from the cyclic offset pairs. The UE determines an index of a PSFCH resource based on $(P_{\text{ID}} + M_{\text{ID}}) mod R_{\text{PRB, CS}}^{\text{PSFCH}}$, where $P_{\text{ID}}$ is a physical layer source ID provided in second-level SCI, and $M_{\text{ID}}$ is 0 or an identity (identity) that is of UE receiving the PSSCH and that is indicated by a higher layer.

In conclusion, according to the communication method provided in this embodiment, the second device may send the second information to the first device to indicate whether the second device provides the resource assistance information for the first device, or the second information is used to indicate that the second device provides the resource assistance information for the first device. Therefore, the first device can determine, based on the second information fed back by the second device, whether the second device can provide the resource assistance information, to reduce a delay caused when the terminal device keeps waiting for the second device to provide the resource assistance information, thereby improving communication efficiency of the first device during sidelink communication. In addition, in this embodiment, the PSFCH sent by the second device to the first device indicates both the second information and the HARQ information, so that an existing PSFCH format can be used to a maximum extent to improve resource utilization rate, and the existing PSFCH is relatively slightly changed, which is more helpful for implementation and promotion.

In Embodiment 1, Embodiment 2, and Embodiment 3, the second information transmitted by the second device to the first device may be carried by the PSFCH, and in another possible implementation, the second information may alternatively be carried by a newly defined channel (denoted as a first channel). For example, the newly defined first channel may be named (a new sidelink respond channel, PSRCH) or the like. A name of the newly defined first channel is not limited in this embodiment, provided that the newly defined first channel can be functionally used to carry the second information.

**Embodiment 4**

In the embodiment shown in FIG. 6, if the second information is carried by a PSRCH, a correspondence between the second information and a sequence cyclic shift value of the PSRCH is shown in the following Table 11.

**Table 11**

| Second information | Indicate that the resource assistance information is provided | Indicate that the resource assistance information is not provided |
| --- | --- | --- |
| Value of the second information | 1 | 0 |
| Sequence cyclic shift value | 6 | 0 |

Two results indicated by the second information for whether the second device provides the resource assistance information for the first device are "yes" and "no", which may respectively correspond to two values 1 and 0 of the second information, and may respectively correspond to two values of the sequence cyclic shift value of the PSRCH. Mapping between the second information and the value of the second information, and a mapping relationship between the second information and the sequence cyclic shift value are not limited in this application. For example, in the example shown in Table 1, when the second information indicates that the second device provides the resource assistance information for the first device, the second information corresponds to a first sequence cyclic shift value "6" of the PSRCH. When receiving the sequence cyclic shift value 6 of the PSRCH, the first device determines that the second device provides the resource assistance information for the first device. When the second information indicates that the second device does not provide the resource assistance information for the first device, the second information corresponds to a second sequence cyclic shift value "0" of the PSRCH. When receiving the sequence cyclic shift value 0 of the PSRCH, the first device determines that the second device does not provide the resource assistance information for the first device.

Optionally, it is denoted that the first device sends the first information to the second device in a first slot and the second device sends the second information to the first device in a second slot. In this case, in some cases, a relative relationship between the first slot and the second slot may meet at least the following condition: the second slot is the 1st slot that includes the PSRCH and that is after a slot in which the last symbol of the first information is located, or the second slot may be the 1st slot that includes the PSRCH and that is at an interval of P time units from the first slot, where P is a positive integer, and the time unit may be a slot or may be another time unit used to measure time, which is not limited in this application. For example, P may be 2 or 3, and the slot may be a logical slot in a resource pool.

Further, in this embodiment, when a PSFCH resource exists in a resource pool, a resource carrying the second information may be specifically a PSRCH resource in a third resource set. A resource set used for transmitting a PSRCH resource that carries the second information is denoted as the third resource set, and a resource set used for transmitting a PSRCH resource that carries an HARQ-ACK is denoted as a fourth resource set. The third resource set and the fourth resource set are complementary sets of each other. In addition to sending the second information to the first device by using the PSRCH, the second device may further send HARQ information to the first device by using the PSFCH. Therefore, in this embodiment, the second device obtains different resource sets through division, to distinguish between a PSRCH carrying the HARQ information and a PSRCH carrying the second information that are sent by the second device.

For example, the third resource set and the fourth resource set may be represented by using a bitmap. In a first specific implementation, the third resource set and the fourth resource set may be respectively configured by using two independent bitmaps, for example, "000011" in the bitmap is used to indicate a PSRCH resource carrying the second information, and "111100" in the bitmap is used to indicate a PSFCH resource carrying the HARQ information. It can be learned that in a single slot, a PSRCH resource carrying the second information and a PSFCH resource carrying the HARQ information are complementary sets of each other. Alternatively, in a second specific implementation, the third resource set and the fourth resource set may be jointly configured by using a bitmap, for example, "111100" in the bitmap is used to indicate a PSFCH resource carrying the HARQ information, and the resource set used for transmitting the PSRCH resource that carries the second information is a resource set corresponding to a location indicated by "0" in" 111100" in the bitmap. It can be learned that in a single slot, a PSRCH resource carrying the second information and a PSFCH resource carrying the HARQ information are complementary sets of each other. Alternatively, in a third specific implementation, the third resource set and the fourth resource set may be respectively configured by using two independent bitmaps of different lengths. For example, "111100" in the bitmap is used to indicate a PSFCH resource carrying the HARQ information, and "11" in the bitmap is used to indicate a PSRCH resource carrying the second information, where "11" in the bitmap is specifically in a complementary set of the PSFCH resource carrying the HARQ information, and is used to indicate a PSRCH resource carrying the second information.

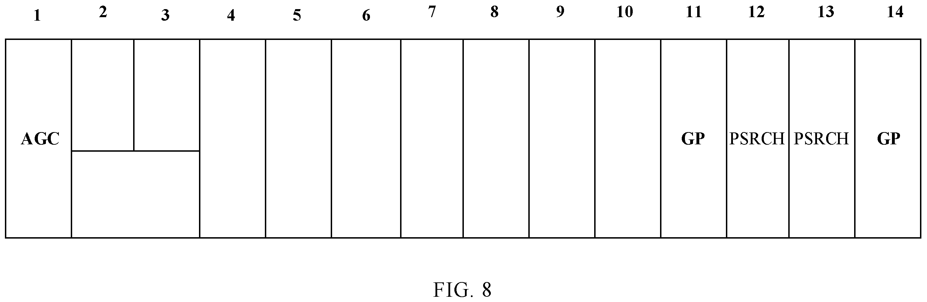

When no PSFCH resource exists in a resource pool, the resource pool cannot be used to configure the PSRCH to carry the second information. Alternatively, FIG. 8 is a schematic diagram of a slot structure. In the slot shown in FIG. 8, a configured PSRCH may occupy the last symbol of the resource pool other than a GP, that is, the second to last PSFCH in the figure, and one symbol is repeated. A resource set used for transmitting the PSRCH and a resource set used for transmitting the PSFCH are independently configured, and are configured in a frequency division multiplexing manner. Therefore, in the slot shown in FIG. 8, when a configuration periodicity of the PSFCH is 1, 2, or 4, a configuration periodicity of the PSRCH is equal to the configuration periodicity of the PSFCH. When the configuration periodicity of the PSFCH is 0, the configuration periodicity of the PSRCH is 0, 1, 2, or 4, or another value. This is not limited in this application.

**Embodiment 5**

In the example shown in FIG. 7, if the second information is carried by a PSRCH, a correspondence between the second information and a sequence cyclic shift value of the PSRCH is shown in the following Table 12.

**Table 12**

| Second information | Indicate that the resource assistance information is provided | Indicate that the resource assistance information is not provided |
|---|---|---|
| Value of the second information | 1 | 0 |
| Sequence cyclic shift value | 6 | N/A |

Specifically, in this embodiment, the second information indicates that the second device provides the resource assistance information for the first device, and may separately correspond to a value of the sequence cyclic shift value of the PSRCH. For example, in the example shown in Table 4, when the second information indicates that the second device provides the resource assistance information for the first device, the second information corresponds to a third sequence cyclic shift value "6" of the PSRCH. When receiving the sequence cyclic shift value 6 of the PSRCH, the first device determines that the second device provides the resource assistance information for the first device. When the first device does not receive the PSRCH, the first device determines that the second device does not provide the resource assistance information for the first device.

Embodiment 1 to Embodiment 5 show that the first channel carrying the second information may be the PSFCH, the PSRCH, or the like. In addition, in another possible implementation, the first channel may alternatively be a PSCCH. In this case, the second information may be carried by the PSCCH, that is, the second information is 1 bit in first-level SCI, and the 1 bit is a field used to indicate that the second device provides the resource assistance information for the device, or is used to indicate that the second device does not provide the resource assistance information for the first device. The 1 bit may be 1 bit with a smallest LSB in a reserved bit in the first-level SCI, or the 1 bit may be 1 bit with a largest MSB in the reserved bit in the first-level SCI.

In another possible implementation, the first channel may alternatively be a PSSCH. In this case, the second information may be carried by the PSSCH, that is, the second information is 1 bit in second-level SCI, and the 1 bit is a field used to indicate that the second device provides the resource assistance information for the device, or is used to indicate that the second device does not provide the resource assistance information for the first device. The 1 bit may be 1 bit with a smallest LSB in a reserved bit in the second-level SCI, or the 1 bit may be 1 bit with a largest MSB in the reserved bit in the second-level SCI.

In another possible implementation, the second information may be indicated by a first sequence, and the second information may be indicated by one or more of the following sequence parameters: a cyclic shift value of the sequence, a root sequence number of the sequence, and an orthogonal cover code (orthogonal cover code, OCC) of the sequence. The first sequence may include a sequence of reference signals, and the reference signal includes one or more of a DMRS (demodulation reference signal) of the PSSCH, a DMRS of the PSCCH, a PTRS (phase tracking reference signal), and a CSI-RS (channel state information reference signal). The first sequence may also include a sequence used to transmit the first channel, that is, the first sequence may be a sequence used to transmit the PSFCH, or the first sequence may be a sequence used to transmit the PSRCH.

In another possible implementation, the second information may be indicated by a MAC CE (medium access control control element). The MAC CE may be used to carry the resource assistance information. The second information may be 1 bit in the MAC CE. Alternatively, that the MAC CE carries the resource assistance information means that the MAC CE agrees to provide the resource assistance information. Alternatively, the MAC CE carries the resource assistance information and one or more parameters in a priority that is used to determine the resource assistance through sensing, a quantity of subchannels, a used resource pool, a reservation periodicity, and a quantity of times of reserving a resource.

Optionally, in Embodiment 1 to Embodiment 5, when the first device expects to obtain the resource assistance information, the first device may actively send the first information to the second device to request the second device to send the resource assistance information. However, in a possible implementation, the second device may directly send the second information to the first device in S102 when the first device does not send the first information, to indicate that the second device provides the resource assistance information for the first device. For example, FIG. 6A is a schematic flowchart of an embodiment of a communication method according to this application. FIG. 6A may be used as an equivalent replacement of the embodiment shown in FIG. 6. To be specific, in the embodiment shown in FIG. 6A, when the first device does not perform S101, the second device may send the second information to the first device. Specific implementation of S102 is the same as that shown in FIG. 6, and details are not described again. For another example, FIG. 7A is a schematic flowchart of an embodiment of a communication method according to this application. FIG. 7A may be used as an equivalent replacement of the embodiment shown in FIG. 7. To be specific, in the embodiment shown in FIG. 7A, when the first device does not perform S101, the second device may send the second information to the first device. Specific implementation of S102 is the same as that shown in FIG. 7, and details are not described again.

Further, Embodiment 1 to Embodiment 5, are specific to a process in which the first device sends the first information to the second device to request to obtain the resource assistance information, and the second device feeds back the second information to the first device to indicate whether the second device provides the resource assistance information for the first device, or a process in which the second device feeds back the second information to the first device to indicate that the second device provides the resource assistance information for the first device. After this, a subsequent action performed by the first device is also related to specific indication of the second information. Steps performed after the first device receives the second information are described below with reference to Embodiment 6 to Embodiment 8.

**Embodiment 6**

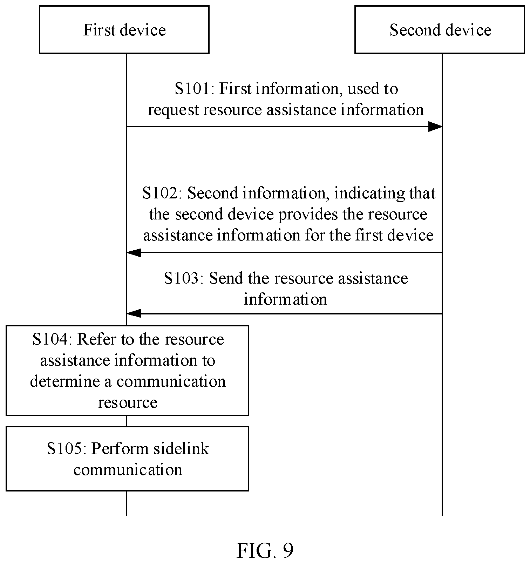

FIG. 9 is a schematic flowchart of an embodiment of a communication method according to this application, and shows that based on Embodiment 1 to Embodiment 5, after the second device sends the second information to the first device in S102 to indicate that the second device can provide the resource assistance information for the first device, the following steps are further included.

S103: The second device sends the resource assistance information to the first device.

S104: The first device determines, with reference to the resource assistance information sent by the second device, a communication resource used when the first device performs sidelink communication with the third device.

S105: The first device performs sidelink communication by using the communication resource determined in S104, and may specifically send sidelink communication data to the third device.

**Embodiment 7**

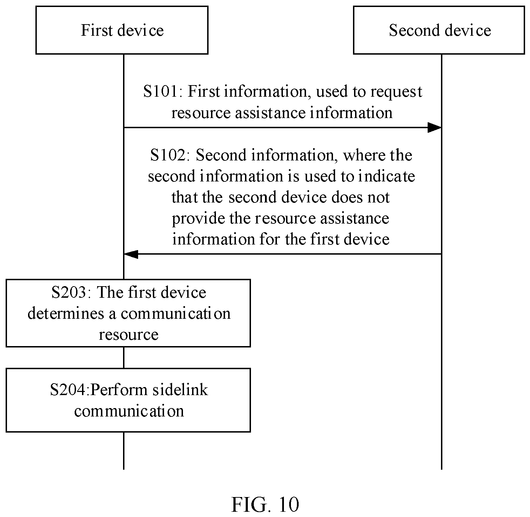

FIG. 10 is a schematic flowchart of an embodiment of a communication method according to this application, and shows that based on Embodiment 1, Embodiment 3, and Embodiment 4, after the second device sends the second information to the first device in S102 to indicate that the second device does not provide the resource assistance information for the first device, the following steps are further included.

S203: When the first device is unable to receive the resource assistance information sent by the second device, the first device determines, in another manner, a communication resource used during sidelink communication.

Specifically, because the first device determines, based on the second information, that the second device does not provide the resource assistance information for the first device, the first device may determine the communication resource in another manner. For example, the first device may send the first information to a fourth device to request the fourth device to provide the resource assistance information for the first device; or the first device may determine the communication resource through sensing, partial sensing, or random selection. Herein, the communication resource may be understood as a resource or a time-frequency resource.

S204: The first device performs sidelink communication by using the communication resource determined in S203, and may send sidelink communication data to the third device.

In conclusion, according to the communication method provided in this embodiment, the first device may determine the communication resource in another manner after determining, based on the second information, that the second device cannot provide the resource assistance information, so that the first device does not need to keep waiting to receive the resource assistance information, as shown in the conventional technology in FIG. 5, to reduce a delay caused when the terminal device keeps waiting for the second device to provide the resource assistance information, thereby improving communication efficiency of the first device during sidelink communication.

**Embodiment 8**

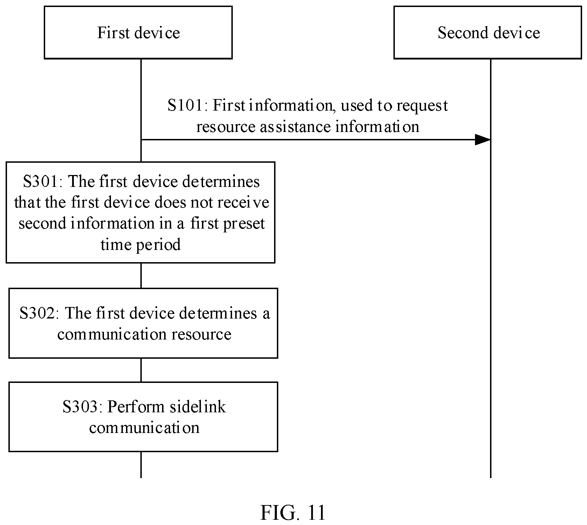

FIG. 11 is a schematic flowchart of an embodiment of a communication method according to this application, and shows that based on Embodiment 1 to Embodiment 5, after the first device sends the first information to the second device in S101, the following steps are further included after S101 in a scenario in which the second device does not receive the first information.

S301: After sending the first information, the first device does not receive, in a first time period, information sent by the second device, that is, the first device does not receive information that is sent by the second device and that is used to determine that the second device can provide the resource assistance information for the first device, or information that is sent by the second device and that is used to determine whether the second device provides the resource assistance information for the first device. This is equivalent to that the first device cannot determine whether the second device provides the resource assistance information for the first device. Alternatively, S301 may be that after sending the first information, the first device does not receive, in the first time period, the resource assistance information or time-frequency resource information from the second device.

Optionally, the first information may be SCI or a MAC CE or PC5 RRC, that is, the first information may be carried in a PSCCH and a PSSCH. The SCI may be first-level SCI or second-level SCI.

S302: After the first time period, the first device determines, in another manner, a communication resource used for performing sidelink communication.

Specifically, the first device may continue to send the first information to the second device to prevent the second device from failing in receiving the first information; or, the first device may send the first information to a fourth device to request the fourth device to provide the resource assistance information for the first device; or the first device may determine the communication resource through sensing, partial sensing, or random selection.

Optionally, the first time period may be preconfigured, may be configured, may be predefined, may be specified, or may be specified by a user of the first device or the second device. The first time period may be configured by a network device through an RRC layer or a MAC CE, or may be configured by the first device through PC5 RRC. The first time period can ensure a delay of sidelink communication of the first device, to avoid a delay caused by waiting for the resource assistance information for a long time.

Optionally, the first information includes the first time period. The first time period can ensure a delay of sidelink communication of the first device, to avoid a delay caused by waiting for the resource assistance information for a long time.

S303: The first device performs sidelink communication by using the communication resource determined in S302, and may specifically send sidelink communication data to the third device.

In conclusion, according to the communication method provided in this embodiment, when the first device does not receive the second information or the resource assistance information in the first time period, the first device can determine the communication resource in another manner instead of keeping waiting for a response of the second device, thereby reducing a delay. Moreover, in some cases, it is assumed that the second device provides the resource assistance information for the first device after an interval of a relatively long time. In this case, the resource assistance information cannot provide a gain for the first device to determine the communication resource, and the first device needs to determine the resource assistance information in another manner immediately after the first time period. Therefore, this embodiment can also ensure a delay requirement and reliability of data transmission, and improve time validity of the resource assistance information.

In some specific implementations, if the first device has to-be-sent data when performing sidelink communication, the first device needs to determine a communication resource to perform sidelink communication. In this case, the first device sends the second information to the second device to request to obtain the resource assistance information, and then determines the communication resource. The first device may frequently request to obtain the resource assistance information from a same second device in a short time. To reduce communication overheads and signaling overheads caused by frequent signaling interaction, in a specific implementation of this embodiment, after the first device sends the first information to the second device for the first time, if the second information sent by the second device to the first device is used to indicate that the second device provides the resource assistance information for the first device, the second device may no longer send the second information to the first device in a subsequent second time period. Specific implementation includes the following Embodiment 9 and Embodiment 10.

**Embodiment 9**

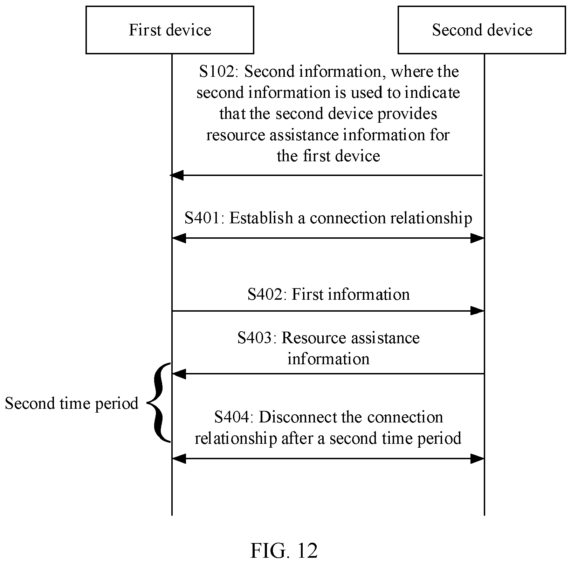

FIG. 12 is a schematic flowchart of an embodiment of a communication method according to this application. The method shown in FIG. 12 shows that based on Embodiment 1 to Embodiment 5, if the second information sent by the second device to the first device in S102 is used to indicate that the second device provides the resource assistance information for the first device, the following steps are further included after S102.

S401: Establish a connection relationship between the first device and the second device, where the connection relationship is a "virtual" relationship established after the first device receives the second information, the established connection relationship is maintained between the first device and the second device in a second time period, so that the second device can continuously provide the resource assistance information for the first device.

S402: If the first device sends the first information to the second device in the second time period to request the second device to provide the resource assistance information for the first device, the second device may not send the second information to the first device to indicate that the second device can provide the resource assistance information for the first device, but directly sends the resource assistance information to the first device through S403. It can be understood that S402 and S403 may be repeatedly performed a plurality of times in the second time period.

Optionally, the second time period may be preconfigured, may be configured, may be predefined, may be specified, or may be specified by a user of the first device or the second device. The second time period may be configured by a network device through an RRC layer or a MAC CE, or may be configured by the first device through PC5 RRC. The second time period avoids signaling overheads caused by frequent signaling interaction and reduces system overheads.

S404: Subsequently, after the second time ends, disconnect the connection relationship established between the first device and the second device in S401. Because the connection relationship is "virtual", the disconnecting the connection relationship may be understood as follows: After the second time period, if the first device sends the first information to the second device again to request the second device to provide the resource assistance information for the first device, the second device needs to send the second information to the first device in the manner in Embodiment 1 or Embodiment 2 of this application.

In conclusion, according to the communication method provided in this embodiment, in a scenario in which the first device consecutively requests the resource assistance information from the second device, after the second device sends the second information to the first device, through the established connection relationship, when the first device sends the first information to the second device again, the second device can directly provide the resource assistance information to the first device without sending the second information, thereby reducing information exchange between the first device and the second device, and further improving communication efficiency.

**Embodiment 10**

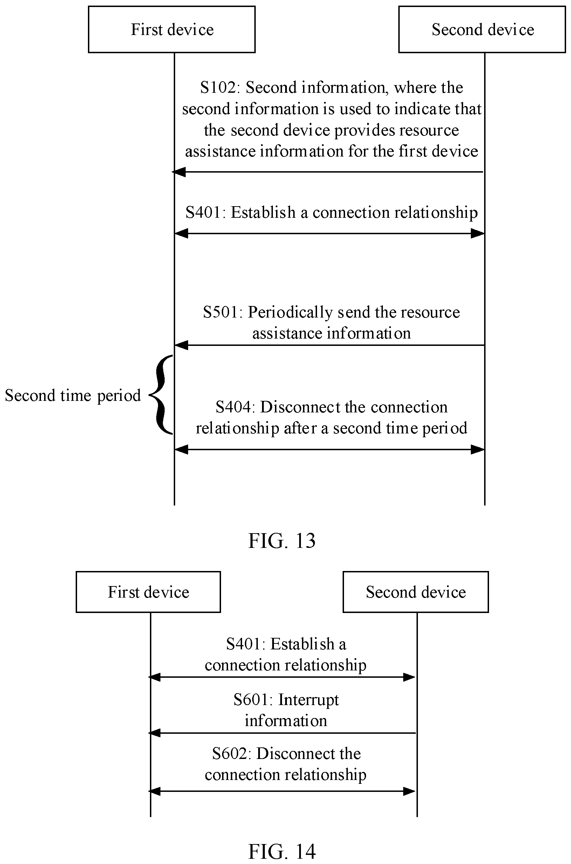

FIG. 13 is a schematic flowchart of an embodiment of a communication method according to this application. The method shown in FIG. 12 may be understood as an equivalent replacement of S402 and S403 in the method shown in FIG. 12. To be specific, after the connection relationship is established between the first device and the second device in S401, the following steps are further included.

S501: The second device periodically sends the resource assistance information to the first device.

In a second time period, the second device may actively send the resource assistance information to the first device when the first device does not send the first information to request to obtain the resource assistance information.

A periodicity for periodically sending the resource assistance information may be preconfigured, may be configured, may be predefined, may be specified, or may be specified by a user of the first device or the second device. The first time period may be configured by a network device through an RRC layer or a MAC CE, or may be configured by the first device through PC5 RRC. The first time period can ensure a delay of sidelink communication of the first device, to avoid a delay caused by waiting for the resource assistance information for a long time.

In an implementation, the first information includes one or more pieces of information such as a periodicity for periodically providing the resource assistance information, and an upper limit of a quantity of resources reserved for a transport block in a periodicity.

In conclusion, according to the communication method provided in this embodiment, in a scenario in which the first device continuously requests the resource assistance information from the second device, the second device needs to send the second information to the first device only once, through the established connection relationship, the second device actively periodically sends the resource assistance information to the first device, thereby further reducing information exchange between the first device and the second device, further improving an intelligence degree of requesting the resource assistance information from the second device by the first device, and further improving communication efficiency.

**Embodiment 11**

Based on Embodiment 9 and Embodiment 10, the connection relationship established between the first device and the second device may be understood as a "virtual" connection relationship of "requesting a resource-providing a resource". Duration of the connection relationship may be a time window or a timer (timer), and total duration of the time window or the timer is the second time period.

For example, after the first device receives the second information from the second device, where the second information is used to indicate that the second device can provide the resource assistance information for the first device, the first device may start or activate a timer to control the connection. For another example, after the first device receives the second information sent by the second device, where the second information is used to indicate that the second device can provide the resource assistance information for the first device, the first device may maintain the connection in a time window. Therefore, the second device does not need to send the second information to the first device after the first device sends the first information to the second device in active time of the timer or maintaining time of the time window.

Optionally, the time window may be pre-configured, or configured by a network device through an RRC layer, or configured by the first device through PC5-RRC.

In an implementation, the time window may be carried in the first information, that is, the second information from the second device carries time window information to indicate, to the second device, time for waiting to receive the second information from the second device, so as to ensure that the second device can send the second information in the time window, thereby ensuring a delay requirement of to-be-sent data of the first device.

In an implementation, a plurality of time length values for the time window may be configured in one resource pool. In this case, the first device may indicate one of the plurality of time length values of the time window by using 1 bit in first-level SCI or second-level SCI.

Alternatively, the first device associates a priority in the first information with one of the plurality of time length values of the time window. For example, the priority in the first information has eight levels, which are respectively denoted by 1, 2, 3, 4, 5, 6, 7, and 8. A lower priority value indicates a higher priority. When time length values of the time window are A, B, C, and D, where A, B, C, and D are all integers and are in units of slots, symbols, or absolute time "milliseconds", and $A<B<C<D$. In this case, a mapping relationship between the priority and the time window may be as follows: If the priority value is 1 and 2, the time window is D; if the priority value is 3 and 4, the time window is C; if the priority value is 5 and 6, the time window is B; and if the priority value is 7 and 8, the time window is A.

Alternatively, a PDB or a remaining PDB in the first information of the first device may correspond to one time length value of the time window. In addition, a time length value that is of the time window and that corresponds to the PDB/remaining PDB should be less than or equal to a time length value of the PDB/remaining PDB. In this case, a delay requirement for sending data by the first equipment can be ensured.

In an implementation, the time length value that is of the time window and that corresponds to the PDB/remaining PDB should be less than or equal to the time length value of the PDB/remaining PDB. In addition, the time length value of the time window is a maximum value in a time length value that is less than or equal to the time length value of the PDB/remaining PDB, or the time length value of the time window a minimum value in a time length value that is less than or equal to the time length value of the PDB/remaining PDB, or the time length value of the time window is an average value of a time length value that is less than or equal to the time length value of the PDB/remaining PDB, where the average value is an algorithm average value.

In Embodiment 9 to Embodiment 11, the connection relationship established between the first device and the second device in the second time period may be disconnected through signaling indication.

**Embodiment 12**

FIG. 14 is a schematic flowchart of an embodiment of a communication method according to this application, and shows that after S401 in which the connection relationship is established between the first device and the second device, in the embodiment shown in FIG. 12, the second device may send interrupt information to the first device in S601. In this case, after receiving the interrupt information, the first device disconnects the connection relationship established between the first device and the second device S602. It can be understood that after S602, if the first device sends the first information to the second device again, the second device feeds back, to the first device in the manner in any of Embodiment 1 to Embodiment 5 of this application, whether the second device can provide the resource assistance information for the first device, or feeds back, to the first device, that the second device can provide the resource assistance information for the first device.

**Embodiment 13**

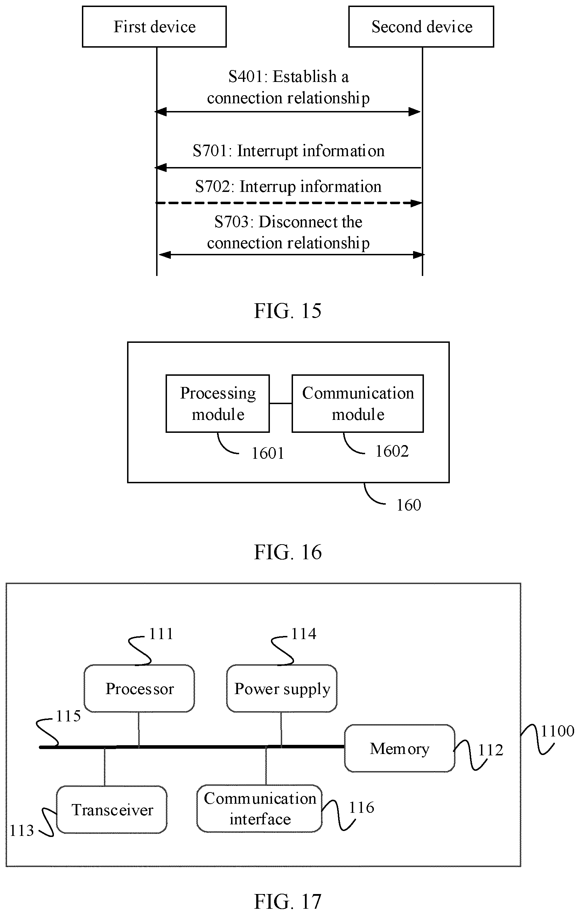

FIG. 15 is a schematic flowchart of an embodiment of a communication method according to this application, and shows that after S401 in which the connection relationship is established between the first device and the second device, in the embodiment shown in FIG 13, the second device may send interrupt information to the first device in S701, or the first device may send interrupt information to the second device in S702. Either S701 or S702 may be selected for implementation. Therefore, in S703, after receiving the interrupt information, the first device or the second device disconnects the connection relationship established between the first device and the second device. After S703, if the first device sends the first information to the second device again, the second device feeds back, to the first device in the manner in any of Embodiment 1 to Embodiment 5 of this application, whether the second device can provide the resource assistance information for the first device.

Optionally, the interrupt information in Embodiment 12 and Embodiment 13 may be specifically indicated by 1 bit in first-level SCI or second-level SCI, for example, may be a field in the SCI, or a reserved bit (a location with a largest MSB or a location with a smallest LSB in the reserved bit), or may be MAC CE (control element) signaling, RRC signaling, MAC signaling, MIB signaling, SIB signaling, or PC5 RRC signaling.

In the foregoing embodiments, the communication method provided in embodiments of this application is described. To implement the functions in the communication method provided in embodiments of this application, the first device and the second device serving as execution bodies may include hardware structures and/or software modules, to implement the functions in a form of a hardware structure, a software module, or a hardware structure plus a software module. Whether one of the foregoing functions is performed in the manner of a hardware structure, a software module, or a hardware structure and a software module depends on a specific application and design constraints of the technical solutions.

For example, FIG. 16 is a schematic diagram of a structure of an embodiment of a communication apparatus according to this application. The communication apparatus 1600 includes a processing module 1601 and a communication module 1602.

The communication apparatus shown in FIG. 16 may serve as a first device to perform steps performed by the first device in any of the foregoing embodiments of this application.

For example, the communication module 1602 may be configured to receive second information from a second device, where the second information indicates that a second device provides resource assistance information for the first device.

Optionally, the second information is used to indicate that the second device provides the resource assistance information for the first device, or the second information is used to indicate whether the second device provides the resource assistance information for the first device.

Optionally, the communication module 1602 is further configured to send first information to the second device, where the first information is used to request to obtain the resource assistance information.

Optionally, the second information is carried by a first channel.

Optionally, when the second information indicates that the second device provides the resource assistance information for the first device, the second information corresponds to a first sequence cyclic shift value of the first channel; or when the second information indicates that the second device does not provide the resource assistance information for the first device, the second information corresponds to a second sequence cyclic shift value of the first channel. Alternatively, when the second information indicates that the second device provides the resource assistance information for the first device, the second information corresponds to a third sequence cyclic shift value of the first channel.

Optionally, the first channel is a physical sidelink feedback channel PSFCH, and the second information is carried in a first resource set. The first resource set is a complementary set that is of a resource set used for carrying hybrid automatic repeat request HARQ information and that is included in a resource set used for transmitting the PSFCH.

Optionally, the first device sends the first information in a first slot, and the first device receives the second information in a second slot. The second slot is the 1st slot that includes the PSFCH and that is after a slot in which the last symbol of the first information is located, or the second slot is the 1st slot that includes the PSFCH and that is at an interval of N time units from the first slot, where N is a positive integer.

Optionally, the second information is carried in a resource set used for transmitting the first channel. The resource set used for transmitting the first channel and a resource set used for transmitting the PSFCH are in frequency division multiplexing, or the resource set used for transmitting the first channel and the resource set used for transmitting the PSFCH are configured independently.

Optionally, the second information corresponds to a plurality of bits of the first channel, where the plurality of bits are used to indicate whether the second device provides the resource assistance information for the first device, and indicate whether the second device successfully receives data sent by the first device.

Optionally, the second information is carried in a resource set used for transmitting the PSFCH, and the resource set used for transmitting the PSFCH is further used by the second device to send HARQ information to the first device.

Optionally, the first device sends the first information in a first slot, and the first device receives the second information in a second slot. The second slot is the 1st slot that includes the PSFCH and that is at an interval of M time units from the first slot, where M is a positive integer.

Optionally, the communication module 1602 is further configured to send the first information to a fourth device, or the communication module 1602 is further configured to send the first information to the second device, or the communication apparatus 1600 determines a communication resource without using the resource assistance information.

Optionally, the communication module 1602 is further configured to receive, at least once in a second time period, the resource assistance information sent by the second device.

Optionally, the communication module 1602 is further configured to send the first information to the second device in the second time period, and receive the resource assistance information sent by the second device based on the first information.

The communication apparatus shown in FIG. 16 may alternatively serve as a second device to perform steps performed by the second device in any of the foregoing embodiments of this application.

For example, the communication module 1602 is configured to send second information to a first device, where the second information indicates that the second device provides resource assistance information for the first device.

Optionally, the second information is used to indicate that the second device provides the resource assistance information for the first device, or the second information is used to indicate whether the second device provides the resource assistance information for the first device.

Optionally, the communication module 1602 is further configured to receive first information from the first device, where the first information is used to request to obtain the resource assistance information.

Optionally, the second information is carried by a first channel.

Optionally, when the second information indicates that the second device provides the resource assistance information for the first device, the second information corresponds to a first sequence cyclic shift value of the first channel; or when the second information indicates that the second device does not provide the resource assistance information for the first device, the second information corresponds to a second sequence cyclic shift value of the first channel. Alternatively, when the second information indicates that the second device provides the resource assistance information for the first device, the second information corresponds to a third sequence cyclic shift value of the first channel.

Optionally, the first channel is a physical sidelink feedback channel PSFCH, and the second information is carried in a first resource set. The first resource set is a complementary set that is of a resource set used for carrying hybrid automatic repeat request HARQ information and that is included in a resource set used for transmitting the PSFCH.

Optionally, the second device sends the second information in a second slot, and the second device receives the first information in a first slot. The second slot is the 1st slot that includes the PSFCH and that is after a slot in which the last symbol of the first information is located, or the second slot is the 1st slot that includes the PSFCH and that is at an interval of N time units from the first slot, where N is a positive integer.

Optionally, the second information is carried in a resource set used for transmitting the first channel. The resource set used for transmitting the first channel and a resource set used for transmitting the PSFCH are in frequency division multiplexing, or the resource set used for transmitting the first channel and the resource set used for transmitting the PSFCH are configured independently.

Optionally, the second information corresponds to a plurality of bits of the first channel, where the plurality of bits are used to indicate whether the second device provides the resource assistance information for the first device, and indicate whether the second device successfully receives data sent by the first device.

Optionally, the second information is carried in a resource set used for transmitting the PSFCH, and the resource set used for transmitting the PSFCH is further used by the second device to send HARQ information to the first device.

Optionally, the second device sends the second information in a second slot, and the second device receives the first information in a first slot.

The second slot is the 1st slot that includes the PSFCH and that is at an interval of M time units from the first slot, where M is a positive integer.

Optionally, the communication module 1602 is further configured to send the resource assistance information to the first device at least once in a second time period.

Optionally, the communication module 1602 is further configured to receive, in the second time period, the first information sent by the first device, and send the resource assistance information to the second device based on the first information.

It should be noted that, it should be understood that division of the modules of the apparatus is merely division of a logical function, and in actual implementation, all or some of the modules may be integrated into a physical entity, or may be physically separated. In addition, the modules may all be implemented in a form of invoking software by a processing element, or may all be implemented in a form of hardware. Alternatively, some of the modules may be implemented in a form of invoking software by a processing element, and some of the modules may be implemented in a form of hardware. For example, the processing module may be a separately disposed processing element, or may be integrated in a chip of the apparatus. In addition, the processing module may be stored in a memory of the apparatus in a form of program code, and a function of the determining module is invoked and executed by a processing element of the apparatus. Implementations of other modules are similar to this. In addition, all or some of the modules may be integrated together, or may be implemented independently. The processing element may be an integrated circuit and has a signal processing capability. In an implementation process, steps in the foregoing methods or the foregoing modules can be implemented by using a hardware integrated logical circuit in the processing element, or by using instructions in a form of software.

For example, the foregoing modules may be configured as one or more integrated circuits for implementing the foregoing methods, such as one or more application-specific integrated circuits (application-specific integrated circuit, ASIC), one or more microprocessors (digital signal processor, DSP), one or more field programmable gate arrays (field programmable gate array, FPGA), or the like. For another example, when one of the foregoing modules is implemented in a form of scheduling program code by a processing element, the processing element may be a general-purpose processor, such as a central processing unit (central processing unit, CPU) or another processor that can invoke the program code. For another example, the modules may be integrated together and implemented in a form of a system-on-a-chip (system-on-a-chip, SOC).

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

FIG. 17 is a schematic diagram of a structure of an embodiment of a communication apparatus according to this application. The communication apparatus may serve as the first device or the second device in any of the foregoing embodiments of this application. As shown in FIG. 17, the communication apparatus 1100 may include a processor 111 (such as a CPU) and a transceiver 113. The transceiver 113 is coupled to the processor 111, and the processor 111 controls a receiving/transmission action of the transceiver 113. Optionally, the communication apparatus 1100 further includes a memory 112. The memory 112 may store various instructions to complete various processing functions and implementing method steps performed by the first device or the second device in embodiments of this application.

Optionally, the communication apparatus in this embodiment of this application may further include a power supply 114, a system bus 115, and a communication interface 116. The transceiver 113 may be integrated into a transceiver of the communication apparatus 1100, or may be a separate transmit/receive antenna on the communication apparatus. The system bus 115 is configured to implement communicative connection between the elements. The communication interface 116 is configured to implement connection and communication between the communication apparatus and another external apparatus.

In this embodiment of this application, the processor 111 is configured to be coupled to the memory 112 to read and execute the instructions in the memory 112, to implement method steps performed by the network device, the terminal device, or the core network device in the foregoing method embodiments. The transceiver 113 is coupled to the processor 111, and the processor 111 controls the transceiver 113 to transmit and receive a message. Implementation principles and technical effects of the processor 111 and the transceiver 113 are similar, and details are not described herein.

The system bus mentioned in the foregoing FIG. 17 may be a peripheral component interconnect (peripheral component interconnect, PCI) bus, an extended industry standard architecture (extended industry standard architecture, EISA) bus, or the like. The system bus may be classified into an address bus, a data bus, a control bus, and the like.

For ease of indication, the bus is indicated by using only one bold line in the figure. However, it does not indicate that there is only one bus or only one type of bus. The communication interface is configured to implement communication between a database access apparatus and another device (such as a client, a read/write database, or a read-only database). The memory may include a RAM, or may include a non-volatile memory (non-volatile memory), for example, at least one disk memory.

The processor mentioned in FIG. 17 may be a general-purpose processor, including a central processing unit CPU, a network processor (network processor, NP), or the like; or may be a digital signal processor DSP, an application-specific integrated circuit ASIC, a field programmable gate array FPGA or another programmable logic device, a discrete gate or transistor logic device, or a discrete hardware component.

Optionally, an embodiment of this application further provides a readable storage medium. The storage medium stores instructions, and when the instructions are run on a computer, the computer is enabled to perform the method performed by the first device or the second device in the foregoing embodiments of this application.

Optionally, an embodiment of this application further provides a chip running instructions. The chip is configured to perform the method performed by the first device or the second device in the foregoing embodiments of this application.

An embodiment of this application further provides a program product. The program product includes a computer program, and the computer program is stored in a storage medium. At least one processor may read the computer program from the storage medium, and when the at least one processor executes the computer program, the method performed by the first device or the second device in the foregoing embodiments of this application may be implemented.

In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates that associated objects are in an "or" relationship. In the formula, the character "/" indicates that associated objects are in a "division" relationship. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A communication method, comprising:
   receiving, by a first device, second information from a second device, wherein the second information indicates that the second device provides resource assistance information for the first device.

2. The method according to claim 1, wherein

   the second information is used to indicate that the second device provides the resource assistance information for the first device; or
   the second information is used to indicate whether the second device provides the resource assistance information for the first device.

3. The method according to claim 1 or 2, before the receiving, by a first device, second information from a second device, further comprising:
   sending, by the first device, first information to the second device, wherein the first information is used to request to obtain the resource assistance information.

**4.** The method according to any one of claims 1 to 3, wherein the second information is carried by a first channel.

**5.** The method according to claim 4, wherein

when the second information indicates that the second device provides the resource assistance information for the first device, the second information corresponds to a first sequence cyclic shift value of the first channel; or when the second information indicates that the second device does not provide the resource assistance information for the first device, the second information corresponds to a second sequence cyclic shift value of the first channel;

or

when the second information indicates that the second device provides the resource assistance information for the first device, the second information corresponds to a third sequence cyclic shift value of the first channel.

**6.** The method according to claim 4 or 5, wherein

the first channel is a physical sidelink feedback channel PSFCH; and
the second information is carried in a first resource set, wherein the first resource set is a complementary set that is of a resource set used for carrying hybrid automatic repeat request HARQ information and that is comprised in a resource set used for transmitting the PSFCH.

**7.** The method according to claim 6, wherein

the first device sends the first information in a first slot, and the first device receives the second information in a second slot; and
the second slot is the 1st slot that comprises the PSFCH and that is after a slot in which the last symbol of the first information is located, or the second slot is the 1st slot that comprises the PSFCH and that is at an interval of N time units from the first slot, wherein N is a positive integer.

**8.** The method according to claim 4 or 5, wherein

the second information is carried in a resource set used for transmitting the first channel; and
the resource set used for transmitting the first channel and a resource set used for transmitting a PSFCH are in frequency division multiplexing; or
the resource set used for transmitting the first channel and the resource set used for transmitting the PSFCH are configured independently.

**9.** The method according to claim 4, wherein
the second information corresponds to a plurality of bits of the first channel, wherein the plurality of bits are used to indicate whether the second device provides the resource assistance information for the first device, and indicate whether the second device successfully receives data sent by the first device.

**10.** The method according to claim 9, wherein

the second information is carried in a resource set used for transmitting a PSFCH; and
the resource set used for transmitting the PSFCH is further used by the second device to send HARQ information to the first device.

**11.** The method according to claim 10, wherein

the first device sends the first information in a first slot, and the first device receives the second information in a second slot; and
the second slot is the 1st slot that comprises the PSFCH and that is at an interval of M time units from the first slot, wherein M is a positive integer.

**12.** The method according to any one of claims 1 to 11, wherein
after the first device receives the second information sent by the second device, wherein the second information indicates that the second device does not provide the resource assistance information for the first device, or after the first device sends the first information and does not receive the second information in a first time period, the method further comprises:
sending, by the first device, the first information to a fourth device; or sending, by the first device, the first information to the second device; or determining, by the first device, a communication resource without using the resource assistance information.

13. The method according to any one of claims 1 to 11, wherein
the first device receives the second information sent by the second device, wherein the second information indicates that the second device provides the resource assistance information for the first device, the method further comprises: receiving, at least once by the first device in a second time period, the resource assistance information sent by the second device.

14. The method according to claim 13, wherein the receiving, by the first device in a second time period, the resource assistance information sent by the second device comprises:

    sending, by the first device, the first information to the second device in the second time period; and receiving, by the first device, the resource assistance information sent by the second device based on the first information.

15. A communication method, comprising:
sending, by a second device, second information to a first device, wherein the second information indicates that the second device provides resource assistance information for the first device.

16. The method according to claim 15, wherein

    the second information is used to indicate that the second device provides the resource assistance information for the first device; or
    the second information is used to indicate whether the second device provides the resource assistance information for the first device.

17. The method according to claim 15 or 16, before the sending, by a second device, second information to a first device, further comprising:
receiving, by the second device, first information from the first device, wherein the first information is used to request to obtain the resource assistance information.

18. The method according to any one of claims 15 to 17, wherein the second information is carried by a first channel.

19. The method according to claim 18, wherein

    when the second information indicates that the second device provides the resource assistance information for the first device, the second information corresponds to a first sequence cyclic shift value of the first channel; or when the second information indicates that the second device does not provide the resource assistance information for the first device, the second information corresponds to a second sequence cyclic shift value of the first channel;
    or
    when the second information indicates that the second device provides the resource assistance information for the first device, the second information corresponds to a third sequence cyclic shift value of the first channel.

20. The method according to claim 18 or 19, wherein

    the first channel is a physical sidelink feedback channel PSFCH; and
    the second information is carried in a first resource set, wherein the first resource set is a complementary set that is of a resource set used for carrying hybrid automatic repeat request HARQ information and that is comprised in a resource set used for transmitting the PSFCH.

21. The method according to claim 20, wherein

    the second device sends the second information in a second slot, and the second device receives the first information in a first slot; and

the second slot is the 1st slot that comprises the PSFCH and that is after a slot in which the last symbol of the first information is located, or the second slot is the 1st slot that comprises the PSFCH and that is at an interval of N time units from the first slot, wherein N is a positive integer.

22. The method according to claim 18 or 19, wherein

the second information is carried in a resource set used for transmitting the first channel; and
the resource set used for transmitting the first channel and a resource set used for transmitting a PSFCH are in frequency division multiplexing; or
the resource set used for transmitting the first channel and the resource set used for transmitting the PSFCH are configured independently.

23. The method according to claim 18, wherein
the second information corresponds to a plurality of bits of the first channel, wherein the plurality of bits are used to indicate whether the second device provides the resource assistance information for the first device, and indicate whether the second device successfully receives data sent by the first device.

24. The method according to claim 23, wherein

the second information is carried in a resource set used for transmitting a PSFCH; and
the resource set used for transmitting the PSFCH is further used by the second device to send HARQ information to the first device.

25. The method according to claim 24, wherein

the second device sends the second information in a second slot, and the second device receives the first information in a first slot; and
the second slot is the 1st slot that comprises the PSFCH and that is at an interval of M time units from the first slot, wherein M is a positive integer.

26. The method according to any one of claims 15 to 25, wherein the second information indicates that the second device provides the resource assistance information for the first device, and the method further comprises:
sending, by the second device, the resource assistance information to the first device at least once in a second time period.

27. The method according to claim 26, wherein the sending, by the second device, the resource assistance information to the first device in a second time period comprises:

receiving, by the second device, the first information from the first device in the second time period; and
sending, by the second device, the resource assistance information to the second device based on the first information.

28. A communication apparatus, comprising a communication module and a processing module, wherein

the communication module is configured to implement communication between the communication apparatus and with another apparatus; and
the processing module is configured to implement the method according to any one of claims 1 to 14 or according to any one of claims 15 to 27.

29. A communication apparatus, comprising a processor and a communication interface, wherein

the communication interface is configured to implement communication between the communication apparatus and another apparatus; and
the processor is configured to implement the method according to any one of claims 1 to 14 or according to any one of claims 15 to 27.

30. A computer-readable storage medium, wherein the computer-readable storage medium stores a computer program, and when the computer program is run, the method according to any one of claims 1 to 14 or according to any one of claims 15 to 27 may be implemented.

Network device

SL communication

Terminal device 1                    Terminal device 2

FIG. 1

Pedestrian

Device

Network

Vehicle

FIG. 2

| 1 | 2 | 3 | 4 | 5 | 6 | 7 | 8 | 9 | 10 | 11 | 12 | 13 | 14 |

AGC

PSCCH

GP

FIG. 3

FIG. 4

UE 3

UE 1

UE 2

S10: Resource assistance
information request

S20: Resource assistance
information

S30: Determine a
communication
resource

S40: Sidelink
communication

FIG. 5

First device

Second device

S101: First information, used to
request resource assistance
information

S102: Second information, where
the second information is used to
indicate whether the second device
provides the resource assistance
information for the first device

FIG. 6

| First device | | Second device |
|---|---|---|

S102: Second information, where the second information is used to indicate whether the second device provides resource assistance information for the first device

FIG. 6A

| First device | | Second device |
|---|---|---|

S101: First information, used to request resource assistance information

S102: Second information, where the second information is used to indicate that the second device provides the resource assistance information for the first device

FIG. 7

| First device | | Second device |
|---|---|---|

S102: Second information, where the second information is used to indicate that the second device provides resource assistance information for the first device

FIG. 7A

| 1 | 2 | 3 | 4 | 5 | 6 | 7 | 8 | 9 | 10 | 11 | 12 | 13 | 14 |
|---|---|---|---|---|---|---|---|---|----|----|----|----|----|
| AGC | | | | | | | | | | GP | PSRCH | PSRCH | GP |

FIG. 8

First device

Second device

S101: First information, used to request resource assistance information

S102: Second information, indicating that the second device provides the resource assistance information for the first device

S103: Send the resource assistance information

S104: Refer to the resource assistance information to determine a communication resource

S105: Perform sidelink communication

FIG. 9

```
┌─────────────────────┐                      ┌─────────────────────┐
│     First device    │                      │    Second device    │
└─────────────────────┘                      └─────────────────────┘
           │                                            │
           │   S101: First information, used to request │
           │        resource assistance information     │
           │───────────────────────────────────────────▶│
           │                                            │
           │   S102: Second information, where the      │
           │   second information is used to indicate   │
           │   that the second device does not          │
           │   provide the resource assistance          │
           │   information for the first device         │
           │◀───────────────────────────────────────────│
           │                                            │
  ┌────────────────────────┐                            │
  │  S203: The first device│                            │
  │ determines a communication                          │
  │        resource        │                            │
  └────────────────────────┘                            │
           │                                            │
  ┌────────────────────────┐                            │
  │  S204:Perform sidelink │                            │
  │     communication      │                            │
  └────────────────────────┘                            │
           │                                            │
```

FIG. 10

```
┌─────────────────────────┐              ┌─────────────────────────┐
│       First device      │              │      Second device      │
└─────────────────────────┘              └─────────────────────────┘
             │                                          │
             │  S101: First information, used to request │
             │      resource assistance information      │
             │──────────────────────────────────────────▶│
  ┌──────────────────────────────┐                      │
  │ S301: The first device       │                      │
  │ determines that the first    │                      │
  │ device does not receive      │                      │
  │ second information in a first │                      │
  │ preset time period           │                      │
  └──────────────────────────────┘                      │
  ┌──────────────────────────────┐                      │
  │ S302: The first device       │                      │
  │ determines a communication   │                      │
  │ resource                     │                      │
  └──────────────────────────────┘                      │
  ┌──────────────────────────────┐                      │
  │ S303: Perform sidelink       │                      │
  │ communication                │                      │
  └──────────────────────────────┘                      │
             │                                          │
```

FIG. 11

| First device | | Second device |
| --- | --- | --- |

S102: Second information, where the second information is used to indicate that the second device provides resource assistance information for the first device

S401: Establish a connection relationship

S402: First information

S403: Resource assistance information

Second time period

S404: Disconnect the connection relationship after a second time period

FIG. 12

| First device | | Second device |
|---|---|---|

S102: Second information, where the second information is used to indicate that the second device provides resource assistance information for the first device

S401: Establish a connection relationship

S501: Periodically send the resource assistance information

Second time period {

S404: Disconnect the connection relationship after a second time period

FIG. 13

| First device | Second device |
|---|---|

S401: Establish a connection relationship

S601: Interrupt information

S602: Disconnect the connection relationship

FIG. 14

FIG. 15

FIG. 16

FIG. 17

## INTERNATIONAL SEARCH REPORT

| International application No. |
|---|
| **PCT/CN2021/108482** |

**A. CLASSIFICATION OF SUBJECT MATTER**

H04W 72/04(2009.01)i; H04W 4/40(2018.01)n

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; 3GPP: 侧, 旁, 边, 链路, 资源, 辅助, 分配, 配置, 物理侧行链路反馈信道; v2x, sidelink, side-link, psfch, resourc+, auxiliary, allocat+, configur+

**C. DOCUMENTS CONSIDERED TO BE RELEVANT**

| Category* | Citation of document, with indication, where appropriate, of the relevant passages | Relevant to claim No. |
|---|---|---|
| X | CN 110958096 A (TELECOMMUNICATIONS SCIENCE AND TECHNOLOGY RESEARCH INSTITUTE CO., LTD.) 03 April 2020 (2020-04-03) claims 1-33, description paragraphs [0291]-[0317], [0480]-[0484], [0595]-[0599] and [0850]-[0851], figures 2-4 | 1-4, 15-18, 28-30 |
| X | CN 110958586 A (TELECOMMUNICATIONS SCIENCE AND TECHNOLOGY RESEARCH INSTITUTE CO., LTD.) 03 April 2020 (2020-04-03) description paragraphs [0190]-[0197], [0280]-[0297] and [0449] | 1-4, 15-18, 28-30 |
| A | CN 110933753 A (VIVO COMMUNICATION TECHNOLOGY CO., LTD.) 27 March 2020 (2020-03-27) entire document | 1-30 |
| A | WO 2020033088 A1 (CONVIDA WIRELESS, L.L.C.) 13 February 2020 (2020-02-13) entire document | 1-30 |
| A | CN 108419294 A (CHINA ACADEMY OF TELECOMMUNICATIONS TECHNOLOGY) 17 August 2018 (2018-08-17) entire document | 1-30 |

☐ Further documents are listed in the continuation of Box C.  ☑ See patent family annex.

| * Special categories of cited documents: | "T" | later document published after the international filing date or priority date and not in conflict with the application but cited to understand the principle or theory underlying the invention |
|---|---|---|
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **08 October 2021** | **15 October 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/108482** |

| Patent document cited in search report | | | Publication date (day/month/year) | Patent family member(s) | | | Publication date (day/month/year) |
| --- | --- | --- | --- | --- | --- | --- | --- |
| CN | 110958096 | A | 03 April 2020 | WO | 2020063070 | A1 | 02 April 2020 |
| CN | 110958586 | A | 03 April 2020 | WO | 2020062999 | A1 | 02 April 2020 |
| CN | 110933753 | A | 27 March 2020 | None | | | |
| WO | 2020033088 | A1 | 13 February 2020 | CN | 112567837 | A | 26 March 2021 |
| | | | | KR | 20210042129 | A | 16 April 2021 |
| | | | | EP | 3821658 | A1 | 19 May 2021 |
| | | | | IN | 202117009379 | A | 23 April 2021 |
| CN | 108419294 | A | 17 August 2018 | WO | 2018145628 | A1 | 16 August 2018 |
| | | | | EP | 3582564 | A1 | 18 December 2019 |
| | | | | CN | 108419294 | B | 21 February 2020 |
| | | | | US | 2019373617 | A1 | 05 December 2019 |
| | | | | EP | 3582564 | A4 | 22 January 2020 |

Form PCT/ISA/210 (patent family annex) (January 2015)

**EP 4 188 014 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010791671X